# EUROPEAN PATENT SPECIFICATION

(11) **EP 4 296 809 B1**
(45) Date of publication and mention of the grant of the patent: **03.12.2025**
(21) Application number: 23169981.0
(22) Date of filing: 26.04.2023
(51) Int. Cl.: G05B 19/4099, G05B 19/404, B29C 70/42, B29C 70/54, B29C 70/38

(54) **COMPOSITE MANUFACTURING SYSTEM AND METHOD**
SYSTEM UND VERFAHREN ZUR HERSTELLUNG VON VERBUNDWERKSTOFFEN
SYSTÈME ET PROCÉDÉ DE FABRICATION DE COMPOSITE

(30) Priority: 22.06.2022 US 202263366783 P; 10.03.2023 US 202318181657
(43) Date of publication of application: 27.12.2023
(73) Proprietor: The Boeing Company, Arlington, VA 22202 (US)
(72) Inventor: Rabiega, Marcin A., Arlington, 22202 (US); Louie, Michael K., Arlington, 22202 (US); Sherrard, Ethan G., Arlington, 22202 (US); Rudberg, Todd, Arlington, 22202 (US); Wood, Richard, Arlington, 22202 (US); Perla, Luis A., Arlington, 22202 (US); Poe, Brandon, Arlington, 22202 (US)
(74) Representative: Witte, Weller & Partner Patentanwälte mbB

(56) References cited:
- EP-A1- 4 006 667
- US-A1- 2003 229 415

## Description

### FIELD

The present disclosure relates generally to composite manufacturing and, more particularly, to a system and method for composite manufacturing that compensates a numerical control composite placement machine for variations in a position of a lamination tool.

### BACKGROUND

Platforms, such as aircraft and automobiles, are being designed and manufactured with greater and greater percentages of composite materials. For example, composite materials are used in aircraft to decrease the weight of the aircraft. This decreased weight improves performance features, such as payload capacities and fuel efficiencies. Further, composite materials provide longer service life for various components in an aircraft.

Automated composite manufacturing requires high accuracy. For example, automated composite manufacturing ordinarily requires a lamination tool to be scanned, a position of the lamination tool to determined, and a numerically controlled composite placement machine to be aligned with the position of the tool. Traditional solutions require a scan of an entirety of the surface of the lamination tool to establish rigid body transform alignment features requiring repeatability of use. This process requires significant time and effort and does not allow for efficient local variation compensation. Accordingly, those skilled in the art continue with research and development efforts in the field of automated composite manufacturing.

US 2003/229415 A1, according to its abstract, states that a method and system compensates for vertical deflection for parts manufactured by a numerically controlled (NC) machine. The (NC) machine has an application head position programmed to a plurality of nominal tool coordinates. Each nominal tool coordinate has a horizontal coordinate, a rotational coordinate, and a vertical coordinate. A tool used to manufacture the part is placed on the NC machine. The tool has a plurality of actual tool coordinates, each actual tool coordinate has a horizontal component, a rotational component, and a vertical sag component. A difference between each vertical sag component and a corresponding one of the nominal tool coordinates is calculated. Each difference is multiplied by a multiplier value providing an adjusted sag value. Each adjusted sag value is subtracted from the application head position for each actual tool horizontal or rotational coordinate to compensate the part for the vertical sag of the tool during manufacture.

### SUMMARY

According to the present disclosure, a composite manufacturing system as defined in claim 1, a composite manufacturing method as defined in claim 6, and a computer program as defined in claim 13 are provided. Although the invention is only defined by the claims, the below embodiments, examples and aspects are present for aiding in understanding the background and advantages of the invention.

Disclosed are examples of a composite manufacturing system, a composite manufacturing method, and a computer system for the composite manufacturing system. The following is a non-exhaustive list of examples, which may or may not be claimed, of the subject matter according to the present disclosure.

In an example, the disclosed composite manufacturing system includes a lamination tool. The lamination tool includes a lamination surface, a plurality of first locating targets extending the lamination surface along a first side of the lamination tool, and a plurality of second locating targets extending the lamination surface along a second side of the lamination tool, opposite the first side. The system also includes a computer-aided measurement system. The computer-aided measurement system measures the first locating targets, the second locating targets, and a series of line profiles of the lamination surface and generates master surface-data and master target-data. The master target-data is representative of target positions of the first locating targets and the second locating targets. The master surface-data is representative of profile positions of the line profiles of the lamination surface. Each one of the line profiles is associated with and extends between one of a plurality of target pairs. Each one of the target pairs includes one of the first locating targets and an opposing one of the second locating targets. The system further includes a computing device adapted to generate a master file that establishes a spatial relationship between the master target-data and the master surface-data and to associate the master file with the lamination tool.

In an example, the composite manufacturing method includes steps of: (1) measuring first locating targets, second locating targets, and a series of line profiles of a lamination surface of a lamination tool; (2) generating master surface-data and master target-data; (3) generating a master file that establishes a spatial relationship between the master target-data and the master surface-data; and (4) associating the master file with the lamination tool. The master target-data is representative of target positions of the first locating targets and the second locating targets. The master surface-data is representative of profile positions of the line profiles of the lamination surface. Each one of the line profiles is associated with and extends between one of a plurality of target pairs. Each one of the target pairs includes one of the first locating targets and an opposing one of the second locating targets.

In an example, the disclosed computer system includes a processor unit coupled to a storage device, comprising program code that is executable by the processor unit to: (1) instruct a computer-aided measuring system to measure a plurality of first locating targets, a plurality of second locating targets, and a series of line profiles of a lamination surface of a lamination tool and to generate master surface-data and master target-data; (2) generate a master file that establishes a spatial relationship between the master target-data and the master surface-data; and (3) associate the master file with the lamination tool. The master target-data is representative of target positions of the first locating targets and the second locating targets. The master surface-data is representative of profile positions of the line profiles of the lamination surface. Each one of the line profiles is associated with and extends between one of a plurality of target pairs. Each one of the target pairs includes one of the first locating targets and an opposing one of the second locating targets.

According to an aspect of the present disclosure, a composite manufacturing system comprising:
a lamination tool comprises
   a lamination surface;
   a plurality of first locating targets extending the lamination surface along a first side of the lamination tool; and
   a plurality of second locating targets extending the lamination surface, along a second side of the lamination tool, opposite the first side;
a computer-aided measurement system adapted to measure the first locating targets, the second locating targets, and a series of line profiles of the lamination surface and to generate master surface-data and master target-data, wherein:
   the master target-data is representative of target positions of the first locating targets and the second locating targets;
   the master surface-data is representative of profile positions of the line profiles of the lamination surface;
   each one of the line profiles is associated with and extends between one of a plurality of target pairs; and
   each one of the target pairs comprises one of the first locating targets and an opposing one of the second locating targets; and
a computing device adapted to:
   generate a master file that establishes a spatial relationship between the master target-data and the master surface-data; and
   associate the master file with the lamination tool.

Advantageously, the composite manufacturing system is one, wherein:
the computing device is adapted to:
   divide the master file into a plurality of zones; and
   associate the zones with corresponding portions of the lamination surface,
each one of the zones comprises a portion of the master surface-data representing three of the line profiles and a portion of the master target-data representing three of the target pairs associated with the three of the line profiles; and
each one of the zones overlaps a directly adjacent one of the zones such that a portion of the master surface-data representing one of the line profiles and a portion of the master target-data representing one of the target pairs associated with the one of the line profiles is shared by a directly adjacent pair of the zones.

Preferably, the composite manufacturing system is one, wherein:
the computer-aided measurement system is adapted to remeasure the first locating targets and the second locating targets and to generate measured target-data;
the measured target-data is representative of the target positions of the first locating targets and the second locating targets; and
the computing device is adapted to determine the profile positions of the line profiles of the lamination surface from the measured target-data based on the spatial relationship between the master target-data and the master surface-data established by the master file.
Preferably, the composite manufacturing system further comprises a numerical control composite placement machine configured to perform a composite placement operation based on a nominal position of the lamination surface,
wherein:
   the computing device is adapted to:
   compare the profile positions of the line profiles of the lamination surface represented by the master surface-data for the zones to nominal positions of corresponding portions of the lamination surface;
   determine a plurality of local deviations between the profile positions and the nominal positions;
   determine an overall deviation from the local deviations; and
   transfer the overall deviation to the numerical control composite placement machine; and
the numerical control composite placement machine compensates a numerical control program path based on the overall deviation.

Preferably, the composite manufacturing system is one, wherein:
the computer-aided measurement system is adapted to remeasure select ones of the first locating targets and the second locating targets corresponding to one of the zones and to generate the measured target-data; and
the computing device is adapted to:
   determine the profile positions of the line profiles of the lamination surface represented by the master surface-data and associated with the select ones of the first locating targets and the second locating targets corresponding to the one of the zones from the measured target-data based on the spatial relationship between the master target-data and the master surface-data established by the master file;
   compare the profile positions of the line profiles represented by the master surface-data for the one of the zones to the nominal positions of a corresponding portion of the lamination surface;
   determine a local deviation between the profile positions and the nominal positions;
   modify the overall deviation with the local deviation; and
   transfer the overall deviation to the numerical control composite placement machine; and
the numerical control composite placement machine compensates the numerical control program path based on the overall deviation as modified by the local deviation.

Preferably, the composite manufacturing system further comprises a vision system configured to visually inspect a composite laminate formed on the lamination surface of the lamination tool during the composite placement operation performed by the numerical control composite placement machine,
wherein:
the computing device is adapted to:
   detect an anomaly in the composite laminate; and
   determine one of the zones corresponding to a portion of the lamination surface associated with a location of the anomaly; and
the select ones of the first locating targets and the second locating targets that are remeasured by the computer-aided measurement system correspond to the one of the zones.

Preferably, the composite manufacturing system further comprises a plurality of lamination tools, each one of the lamination tools further comprising an identifier,
wherein:
the computer-aided measurement system adapted to measure the first locating targets, the second locating targets, and a series of the line profiles of the lamination surface and to generate the master surface-data and the master target-data for each one of the lamination tools; and
the computing device adapted to:
generate the master file that establishes the spatial relationship between the master target-data and the master surface-data for each one of the lamination tools; and
associate the master file with the identifier of a corresponding one of the lamination tools.

According to another aspect of the present disclosure, a composite manufacturing method comprising steps of:
measuring first locating targets, second locating targets, and a series of line profiles of a lamination surface of a lamination tool;
generating master surface-data and master target-data, wherein:
   the master target-data is representative of target positions of the first locating targets and the second locating targets;
   the master surface-data is representative of profile positions of the line profiles of the lamination surface;
   each one of the line profiles is associated with and extends between one of a plurality of target pairs; and
   each one of the target pairs comprises one of the first locating targets and an opposing one of the second locating targets;
generating a master file that establishes a spatial relationship between the master target-data and the master surface-data; and
associating the master file with the lamination tool.

Advantageously, the composite manufacturing further comprising steps of:
dividing the master file into a plurality of zones; and
associating the zones with corresponding portions of the lamination surface,
wherein:
   each one of the zones comprises a portion of the master surface-data representing three of the line profiles and a portion of the master target-data representing three of the target pairs associated with the three of the line profiles; and
each one of the zones overlaps a directly adjacent one of the zones such that a portion of the master surface-data representing one of the line profiles and a portion of the master target-data representing one of the target pairs associated with the one of the line profiles is shared by a directly adjacent pair of the zones.

Preferably, the composite manufacturing method further comprising steps of:
remeasuring the first locating targets and the second locating targets;
generating measured target-data, wherein the measured target-data is representative of the target positions of the first locating targets and the second locating targets; and
determining the profile positions of the line profiles of the lamination surface from the measured target-data based on the spatial relationship between the master target-data and the master surface-data established by the master file.

Preferably, the composite manufacturing method further comprising steps of:
comparing the profile positions of the line profiles represented by the master surface-data for the zones to the nominal positions of corresponding portions of the lamination surface;
determining a plurality of local deviations between the profile positions and the nominal positions;
determining an overall deviation from the local deviations;
transferring the overall deviation to a numerical control composite placement machine;
compensating a numerical control program path of the numerical control composite placement machine based on the overall deviation; and
performing a composite placement operation using the numerical control composite placement machine according to the numerical control program path that is compensated based on the overall deviation.

Preferably, the composite manufacturing method further comprising steps of:
remeasuring select ones of the first locating targets and the second locating targets corresponding to one of the zones;
generating the measured target-data;
determining the profile positions of the line profiles of the lamination surface associated with the select ones of the first locating targets and the second locating targets corresponding to the one of the zones from the measured target-data based on the spatial relationship between the master target-data and the master surface-data established by the master file;
comparing the profile positions of the line profiles represented by the master surface-data for the one of the zones to the nominal positions of a corresponding portion of the lamination surface;
determining a local deviation between the profile positions and the nominal positions;
modifying the overall deviation with the local deviation;
transferring the overall deviation to the numerical control composite placement machine;
compensating the numerical control program path based on the overall deviation; and
performing the composite placement operation using the numerical control composite placement machine according to the numerical control program path that is compensated based on the overall deviation.

Preferably, the composite manufacturing method further comprising steps of:
inspecting a composite laminate formed on the lamination surface of the lamination tool during the composite placement operation performed by the numerical control composite placement machine;
detecting an anomaly in the composite laminate; and
determining one of the zones corresponding to a portion of the lamination surface associated with a location of the anomaly,
wherein the select ones of the first locating targets and the second locating targets that are remeasured correspond to the one of the zones.

Preferably, the composite manufacturing method further comprising steps of:
measuring the first locating targets, the second locating targets, and a series of the line profiles of the lamination surface of each one of a plurality of lamination tools;
generating the master surface-data and the master target-data for each one of the lamination tools;
generating the master file that establishes the spatial relationship between the master target-data and the master surface-data for each one of the lamination tools; and
associating the master file with an identifier of a corresponding one of the lamination tools.

According to yet another aspect of the present disclosure, a computer system for a composite manufacturing system, the computer system comprising a processor unit coupled to a storage device, comprising program code that is executable by the processor unit to:
instruct a computer-aided measuring system to measure a plurality of first locating targets, a plurality of second locating targets, and a series of line profiles of a lamination surface of a lamination tool and to generate master surface-data and master target-data, wherein:
   the master target-data is representative of target positions of the first locating targets and the second locating targets;
   the master surface-data is representative of profile positions of the line profiles of the lamination surface;
   each one of the line profiles is associated with and extends between one of a plurality of target pairs; and
   each one of the target pairs comprises one of the first locating targets and an opposing one of the second locating targets;
generate a master file that establishes a spatial relationship between the master target-data and the master surface-data; and
associate the master file with the lamination tool.

Advantageously, the computer system is one wherein the program code is executable by the processor unit to:
divide the master file into a plurality of zones; and
associate the zones with corresponding portions of the lamination surface,
wherein:
   each one of the zones comprises a portion of the master surface-data representing three of the line profiles and a portion of the master target-data representing three of the target pairs associated with the three of the line profiles; and
   each one of the zones overlaps a directly adjacent one of the zones such that a portion of the master surface-data representing one of the line profiles and a portion of the master target-data representing one of the target pairs associated with the one of the line profiles is shared by a directly adjacent pair of the zones.

Preferably, the computer system is one wherein the program code is executable by the processor unit to:
instruct the computer-aided measurement system to remeasure the first locating targets and the second locating targets and to generate measured target-data, wherein the measured target-data is representative of the target positions of the first locating targets and the second locating targets; and
determine the profile positions of the line profiles of the lamination surface from the measured target-data based on the spatial relationship between the master target-data and the master surface-data established by the master file.

Preferably, the computer system is one wherein:
the program code is executable by the processor unit to:
   compare the profile positions represented by the master surface-data for the zones to nominal positions of corresponding portions of the lamination surface;
   determine a plurality of local deviations between the profile positions and the nominal positions;
   determine an overall deviation from the local deviations; and
   transfer the overall deviation to a numerical control composite placement machine configured to perform a composite placement operation based on the nominal positions; and
the numerical control composite placement machine compensates a numerical control program path based on the overall deviation.

Preferably, the computer system is one wherein:
the program code is executable by the processor unit to:
   instruct the computer-aided measurement system to remeasure select ones of the first locating targets and the second locating targets corresponding to one of the zones and to generate the measured target-data;
   determine the profile positions of the line profiles of the lamination surface associated with the select ones of the first locating targets and the second locating targets corresponding to the one of the zones from the measured target-data based on the spatial relationship between the master target-data and the master surface-data established by the master file;
   compare the profile positions represented by the master surface-data for the one of the zones to the nominal positions of a corresponding portion of the lamination surface;
   determine a local deviation between the profile positions and the nominal positions;
   modify the overall deviation with the local deviation; and
   transfer the overall deviation to the numerical control composite placement machine,
the numerical control composite placement machine compensates the numerical control program path based on the overall deviation as modified by the local deviation.

Preferably, the computer system is one wherein the program code is executable by the processor unit to:
instruct the computer-aided measurement system to measure the first locating targets, the second locating targets, and a series of the line profiles of the lamination surface and to generate the master surface-data and the master target-data for each one of a plurality of lamination tools;
generate the master file that establishes the spatial relationship between the master target-data and the master surface-data for each one of the lamination tools; and
associate the master file with an identifier of a corresponding one of the lamination tools.

Other examples of the disclosed composite manufacturing system, method, and computer system will become apparent from the following detailed description, the accompanying drawings, and the appended claims.

### BRIEF DESCRIPTION OF THE DRAWINGS

Fig. 1 is a schematic block diagram of an example of a composite manufacturing system;
Fig. 2 is a schematic, perspective view of an example of a lamination tool of the composite manufacturing system;
Fig. 3 is a schematic, perspective view of an example of the lamination tool having local variations in shape.
Fig. 4 is a schematic, plan view of an example of the lamination tool shown in Fig. 2;
Fig. 5 is a schematic, plan view of an example of the lamination tool shown in Fig. 4, depicting a plurality of line profiles of a lamination surface;
Fig. 6 is a schematic illustration of an example of the lamination tool shown in Fig. 2 represented by collected measurement data;
Fig. 7 is a schematic illustration of an example of the lamination tool shown in Fig. 3 represented by collected measurement data;
Fig. 8 is a schematic illustration of an example of the lamination tool represented by collected measurement data following a series of local rigid body transformations;
Fig. 9 is a flow chart of an example of a composite manufacturing method;
Fig. 10 is a schematic block diagram of a computing device of the composite manufacturing system;
Fig. 11 is a schematic illustration of an example of the composite manufacturing system;
Fig. 12 is a flow diagram of an example of an aircraft manufacturing and service method; and
Fig. 13 is a schematic illustration of an example of an aircraft.

### DETAILED DESCRIPTION

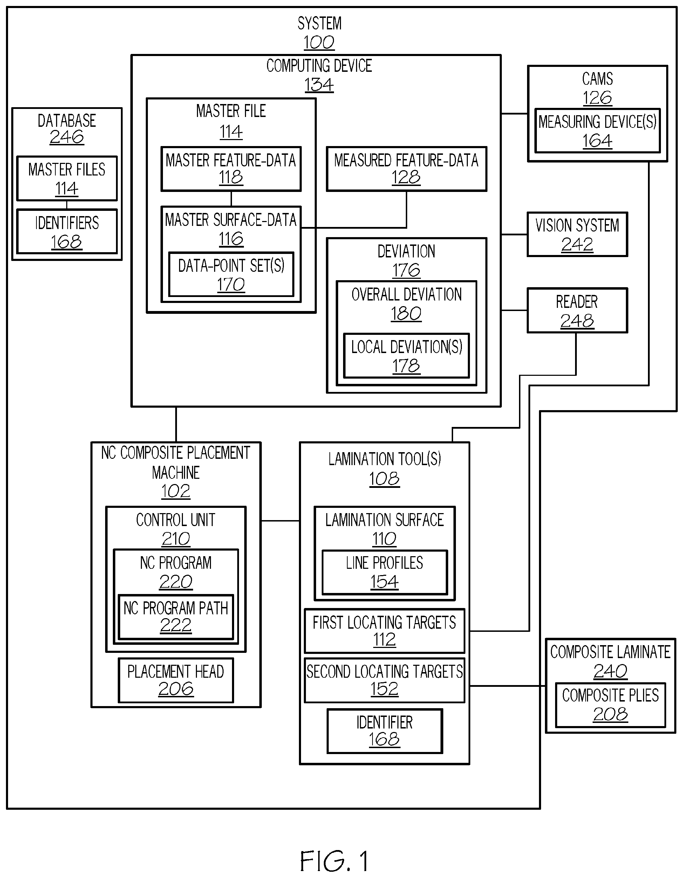

Referring generally to Figs. 1-8 and 11, by way of examples, the present disclosure is directed to a composite manufacturing system 100, which may also be generally referred to herein as the system 100. The system 100 enables efficient collection of data representing a lamination tool 108. The system 100 also enables automated compensation of a numerical control (NC) composite placement machine 102 based on an actual position (e.g., location, orientation, and shape) of the lamination tool 108 represented by the collected data. The system 100 further enables re-use of previously collected data during subsequent machine compensation operations.

Referring now to Fig. 1, in one or more examples, the system 100 includes the lamination tool 108. The lamination tool 108 includes a lamination surface 110 that supports formation of a composite laminate 240. The system 100 includes the NC composite placement machine 102, such as a tape laminating machine or a fiber placement machine. The NC composite placement machine 102 places layers of composite material on the lamination tool 108 to form the composite laminate 240. The system 100 includes a computer-aided measurement system (CAMS) 126. The computer-aided measurement system 126 measures the lamination tool 108 and provides data representing a tool position of the lamination tool 108 in tool space (e.g., relative to a tool coordinate system). The system 100 includes a computing device 134. The computing device 134 determines differences between the tool position of the lamination tool 108 in tool space and a nominal position of the lamination tool 108 in machine space (e.g., relative to a machine coordinate system). The NC composite placement machine 102 is compensated based on such differences before performing a composite placement operation.

Generally, when fabricating the composite laminate 240, composite plies 208 (e.g., layers of composite material) are automatically placed (e.g., laid up or laminated in a layer-by-layer manner) on the lamination tool 108 using the NC composite placement machine 102. The composite plies 208 may take the form of fabrics, tape, tows, or other suitable forms. In some cases, resin may be infused or pre-impregnated into the layers. The composite plies 208 may be laid up in different orientations and different numbers of layers may be used depending on the thickness of the composite laminate 240 being fabricated. The composite plies 208 may compacted or otherwise consolidated or debulked, such as by compaction equipment. After the composite plies 208 are arranged, the composite laminate 240 is cured (e.g., via application of heat and/or pressure) to form a composite structure. The composite laminate 240 may be cured on the lamination tool 108 or may be transferred from the lamination tool 108 to a cure tool (not shown) for performance of a curing operation.

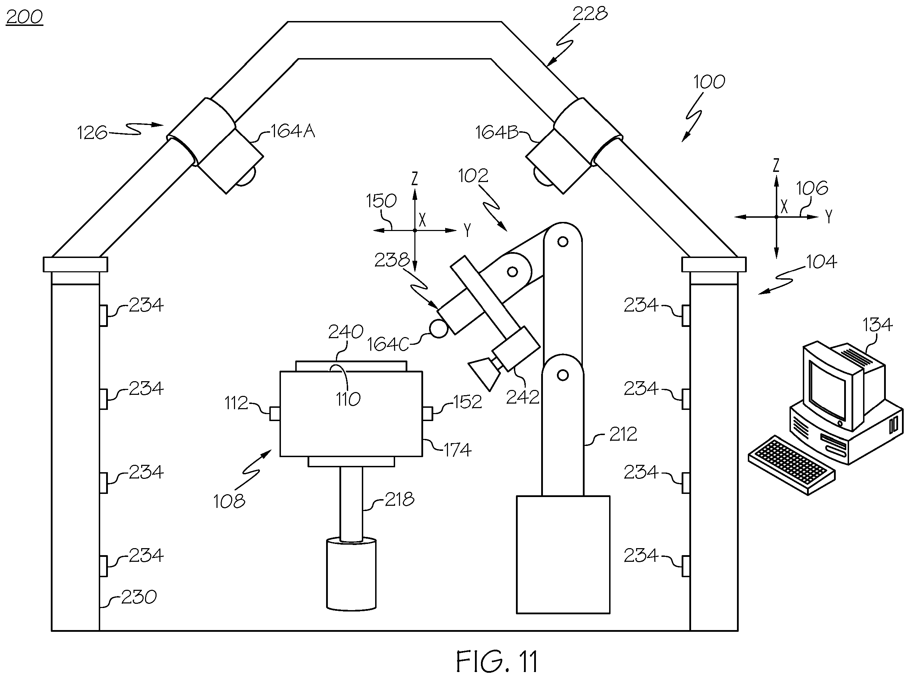

The NC composite placement machine 102 is computer numerically controlled and is operable to meet process specifications by following coded program instructions (e.g., G-code) and without a manual operator directly controlling the process operation. As an example, the NC composite placement machine 102 includes a platform 212 (e.g., as shown in Fig. 11) with multiple degrees of freedom (e.g., a robotic arm) and control unit 210 (e.g., shown in Fig. 1) that operates the platform 212 according to a numerical control (NC) program 220. The NC composite placement machine 102 includes a placement head 206 (e.g., a tool head) that is coupled to the platform 212. As an example, the placement head 206 forms an end effector of the NC composite placement machine 102 and is configured to place each one of the composite plies 208 on the lamination surface 110 or on a previously placed composite ply 208.

Generally, the placement head 206 defines a machine tool-point of the NC composite placement machine 102. During a composite placement (e.g., lamination or layup) operation, the placement head 206 (e.g., the machine tool point) is positioned and moved relative to the lamination tool 108 (e.g., the lamination surface 110) along a numerical control (NC) program path 222 (e.g., tool path) according to the NC program 220. In one or more examples, the NC composite placement machine 102, such as the control unit 210 or the NC program 220, includes a tool path generator that generates the NC program path 222 based on a nominal position of the lamination tool 108.

Generally, the NC program 220 and, more particularly, the NC program path 222 of the NC composite placement machine 102 is generated based on the nominal position of the lamination tool 108 and, more particularly, the nominal position of the lamination surface 110. The nominal position of the lamination tool 108 (e.g., the lamination surface 110) refers to or represents a known theoretical location, orientation, and shape of the lamination tool 108 (e.g., the lamination surface 110) in machine space. However, upon placement of the lamination tool 108 in a work cell 104 of a manufacturing environment 200 (e.g., as shown in Fig. 11), the tool position of the lamination tool 108 and, more particularly, a surface position of the lamination surface 110 may not match that of the nominal position used to create the NC program 220. The tool position of the lamination tool 108 and, more particularly, the surface position of the lamination surface 110 refer to or represent a known actual location, orientation, and shape of the lamination tool 108 (e.g., the lamination surface 110) in tool space.

As such, a transformation is typically utilized to transform the tool position to the nominal position and determine differences between the tool position and the nominal position. The NC composite placement machine 102 is compensated according to differences determined from the transform. As an example, a global rigid body transform is calculated by determining differences in locations of features on the lamination tool 108 in tool space and in machine space. The locations of the features are known in the tool space (e.g., based on measurements of the lamination tool 108) and in the machine space (e.g., based design specifications). By manipulating six arguments (e.g., X, Y, Z, rX, rY, rZ) of the transform, the accuracy of the transform is iteratively tested until the error of the transformation is minimized. The NC program 220 is compensated based on the calculated global transform.

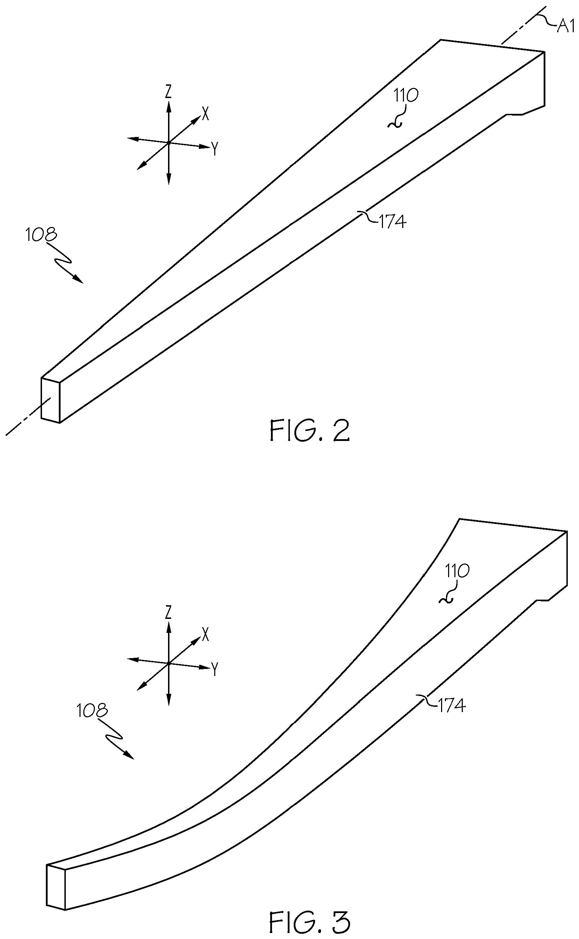

Lamination tools with a high aspect ratio (e.g., the lamination tool 108 shown in Figs. 2 and 3) may not behave as a rigid body. As an example (shown in Fig. 3), one or more portions of the lamination tool 108 may bend about an axis that is perpendicular to a longitudinal axis A1 of the lamination tool 108 (e.g., about a Y-axis and/or a Z-axis) or may twist about an axis that is parallel to the longitudinal axis A1(e.g., about an X-axis), which result in local variations in the tool position. Due to these local variations in the tool position of the lamination tool 108, the rigid body transformation operation described above may not provide sufficient accuracy in machine compensation to enable the NC composite placement machine 102 to fabricate the composite laminate 240 to a required tolerance. As such, a series of local rigid body transforms is calculated (e.g., by a technique similar to the global transform described above) for corresponding sections of the lamination tool 108. The NC program 220 is compensated based on the calculated series of local transforms.

Typically, the lamination surface 110 of the lamination tool 108 is used as the features for calculating the global transform and/or the series of local transforms described above. However, such methods typically require a full surface measurement (e.g., measurement of an entirety or a majority of the lamination surface 110) each time the lamination tool 108 is loaded in the work cell 104 in order to provide sufficient accuracy. As such, the process for measuring the lamination surface 110, calculating the transform, and compensating the NC program 220 for differences between the tool position and the nominal position is time consuming and requires significant processing resources.

Accordingly. the system 100 disclosed herein provides improvements related to the type of data collected and used for machine compensation and the manner in which such data is collected. As an example, the system 100 facilitates a reduction in the amount of data that is used to represent the lamination tool 108 and that is used for machine compensation. As another example, the system 100 facilitates efficient and at least partially automated collection of the data. As another example, the system 100 facilitates re-use of the collected data regardless of local variations in the tool position of the lamination tool 108 that may occur each time the lamination tool 108 is loaded in a work cell.

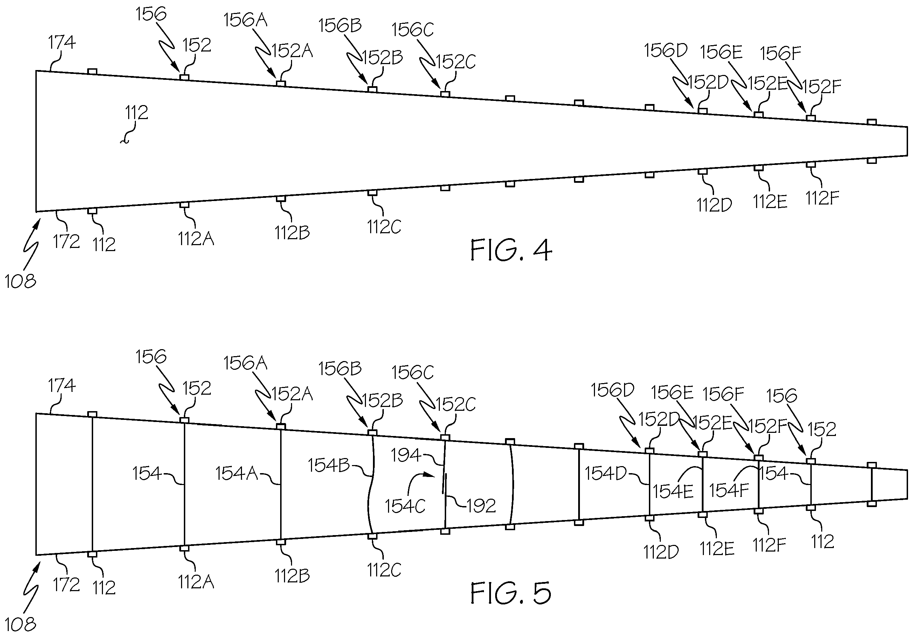

Referring now to Figs. 2 and 3, which illustrate examples of the lamination tool 108, included with or otherwise used by the system 100. The lamination tool 108 may also be referred to as a layup tool or a layup mandrel. In one or more examples, the lamination tool 108 is elongated along the longitudinal axis A1 or otherwise has a high aspect ratio (e.g., a length dimension along the longitudinal axis A1 is magnitudes greater than a width dimension transverse to the longitudinal axis A1). As illustrated in Fig. 4, the lamination tool 108 can bend, twist, sag, or otherwise include local variations in location, orientation, and/or shape when loaded in the work cell 104 for fabrication of the composite laminate 240.

Referring now to Fig. 4, in one or more examples, the lamination tool 108 also includes a plurality of first locating targets 112 and a plurality of second locating targets 152. In one or more examples, the first locating targets 112 are positioned proximate to (e.g., at or near) and extend the lamination surface 110 along the longitudinal axis A1 of the lamination tool 108. For example, the first locating targets 112 are disposed on a first side 172 of the lamination tool 108. The second locating targets 152 are positioned proximate to and extend the lamination surface 110 along the longitudinal axis A1 of the lamination tool 108. For example, the second locating targets 152 are disposed on a second side 174 of the lamination tool 108, which is opposite the first side 172. As will be described in more detail herein below, the first locating targets 112 and the second locating targets 152 are used to repeatably determine an actual tool position of the lamination tool 108 and, thus, an actual surface position of the lamination surface 110 without requiring a subsequent measurement of the lamination surface 110.

In one or more examples, each one of the first locating targets 112 corresponds to or is associated with one of the second locating targets 152. As an example, first locating target 112A may correspond to or otherwise be associated with second locating target 152A, first locating target 112B may correspond to or otherwise be associated with second locating target 152B, first locating target 112C may correspond to or otherwise be associated with second locating target 152C, and so forth.

In one or more examples, the first locating targets 112 and the second locating targets 152 may be identified as a plurality of target pairs 156. Each one of the target pairs 156 includes one of the first locating targets 112 and a corresponding one of the second locating targets 152. As an example, target pair 156A includes first locating target 112A and second locating target 152A, target pair 156B includes first locating target 112B and second locating target 152B, target pair 156C includes first locating target 112C and second locating target 152C, and so forth.

In one or more examples, each one of the first locating targets 112 is directly opposed to or at least approximately aligned with a corresponding one of the second locating targets 152. In other examples, one or more of the first locating targets 112 may be offset from or non-aligned with corresponding ones of the second locating targets 152.

In various examples, the lamination tool 108 may include any suitable number of the first locating targets 112 and the second locating targets 152. The number of the first locating targets 112 and the second locating targets 152 may depend on various factors, such as, but not limited to, the number and type of tool fixtures (e.g., tool fixtures 218 shown in Fig. 11) used to support the lamination tool 108 in the work cell 104, the dimensions and/or shape of the lamination tool 108, the material composition of the lamination tool 108, and the like.

In one or more examples, the number of the target pairs 156 (e.g., first locating targets 112 and corresponding second locating targets 152) and a linear distance or spacing (e.g., along the longitudinal axis A1) between any one of the target pairs 156 and a directly adjacent one of the target pairs 156 are determined and selected to minimize error in the local rigid body transformation operation utilized for machine compensation, minimize the number of target pairs 156 required for an accurate local rigid body transformation operation, and/or to maximize the linear distance between adjacent target pairs 156 suitable for an accurate local rigid body transformation operation. In one or more examples, the number of the target pairs 156 and the linear distance (e.g., spacing) between directly adjacent ones of the target pairs 156 may be calculated by any suitable analytical technique, such as by finite element analysis.

In one or more examples, the linear distance between one of the target pairs 156 and a directly adjacent one of the target pairs 156 is different than the linear distance between another one of the target pairs 156 and a directly adjacent one of the target pairs 156. As an example, the linear distance between target pair 156A and directly adjacent target pair 156B (e.g., located at a wider or more rigid portion of the lamination tool 108) may be different (e.g., greater) than the linear distance between target pair 156D and directly adjacent target pair 156E (e.g., located at a thinner or less rigid portion of the lamination tool 108).

Referring to Figs. 1 and 5, in one or more examples, the computer-aided measurement system 126 is configured to measure the lamination tool 108. As an example, the computer-aided measurement system 126 measures the first locating targets 112, the second locating targets 152, and a series of line profiles 154 of the lamination surface 110. In one or more examples, the line profiles 154 are used as the features, having locations known (e.g., measured or otherwise determined) in tool space and in machine space, for performing the transformation used to compensate the NC composite placement machine 102. In one or more examples, the first locating targets 112, the second locating targets 152, and the line profiles 154 are used as the features, having locations known in tool space and in machine space, for performing the transformation used to compensate the NC composite placement machine 102.

The computer-aided measurement system 126 is configured to generate data that is representative of the lamination tool 108. In one or more examples, the computer-aided measurement system 126 generates master surface-data 116 and master target-data 118. The master target-data 118 is representative of target positions (e.g., locations and orientations) of the first locating targets 112 and the second locating targets 152. The master surface-data 116 is representative of profile positions (e.g., locations, orientations, and shapes) of the line profiles 154 of the lamination surface 110.

In one or more examples, the master target-data 118 includes measurement data (e.g., X, Y, Z-coordinates) that represents the target position of correspond ones of the first locating targets 112 and the second locating targets 152. In one or more examples, the master surface-data 116 includes measurement data (e.g., X, Y, Z-coordinates) that represents the profile position and, thus, the shape of each one of the line profiles 154. As such, in combination, the profile positions of the line profiles 154 represent the surface position (e.g., location, orientation, and shape) of the lamination surface 110.

Referring now to Fig. 5, in one or more examples, each one of the line profiles 154 is associated with and extends between one of the target pairs 156. Each one of the target pairs 156 includes one of the first locating targets 112 and a corresponding (e.g., opposing) one of the second locating targets 152. As an example, line profile 154A extends across the lamination surface 110 between first locating target 112A and second locating target 152A, line profile 154B extends across the lamination surface 110 between first locating target 112B and second locating target 152B, line profile 154C extends across the lamination surface 110 between first locating target 112C and second locating target 152C, and so forth.

Each one of the line profiles 154 includes or is formed by a relatively small portion of the lamination surface 110. Each one of the line profiles 154, as measured by the computer-aided measurement system 126, represents the position (location, orientation, and shape) of a surface profile of a portion of the lamination surface 110. As such, the master surface-data 116 includes a series of sets of data points (e.g., data-point sets 170 shown in Fig. 1). Each one of the data-point sets 170 includes data (e.g., X, Y, Z-coordinates) that represents the profile position of a corresponding one of the line profiles 154.

In one or more examples, one or more of the line profiles 154 (e.g., line profile 154A) is linear (e.g., straight). In one or more examples, one or more of the line profiles 154 (e.g., line profile 154B is non-linear (e.g., curved). In one or more examples, one or more of the line profiles 154 include linear and non-linear portions.

In one or more examples, one or more of the line profiles 154 (e.g., line profile 154A and line profile 154B) is continuous. As an example, line profile 154A extends continuously between first locating target 112A and second locating target 152A. In one or more examples, one or more of the line profiles 154 (e.g., line profile 154C) is discontinuous. As an example, line profile 154C includes a profile first portion 192 and profile second portion 194. The profile first portion 192 extends from first locating target 112B and across a portion of the lamination surface 110 toward second locating target 152B. The profile second portion 194 extends from second locating target 152B and across a portion of the lamination surface 110 toward first locating target 112B.

Referring again to Fig. 1, in one or more examples, the computing device 134 is configured to generate a master file 114. The computing device 134 is also configured to associate the master file 114 with the lamination tool 108.

The master file 114 includes the master target-data 118 and the master surface-data 116. The master file 114 correlates and establishes a spatial relationship between the master target-data 118 and the master surface-data 116. In other words, the master file 114 establishes a fixed spatial relationship between the target positions of the first locating targets 112 and the second locating targets 152, represented by the master target-data 118, and the profile positions of the line profiles 154, represented by the master surface-data 116.

More particularly, the master file 114 establishes a fixed relationship of the profile position of each one of the line profiles 154 as represented by the master surface-data 116 relative to the target positions of a corresponding one of the target pairs 156 (e.g., one of the first locating targets 112 and a one of the second locating targets 152) as represented by the master target-data 118. As an example, the master file 114 establishes a spatial relationship between a portion of the master target-data 118 that represents the target positions of first locating target 112A and second locating target 152A and a portion of the master surface-data 116 that represents the profile position of line profile 154A, establishes a spatial relationship between a portion of the master target-data 118 that represents the target positions of first locating target 112B and second locating target 152B and a portion of the master surface-data 116 that represents the profile position of line profile 154B, and so forth.

It can be appreciated that local variations in the tool position can occur along the length of the lamination tool 108 as a whole (e.g., as shown in Fig. 4). However, relatively small, discrete sections of the lamination tool 108 do not produce such local variations. Accordingly, the profile position of any one of the line profiles 154 relative to the target positions of a corresponding target pair 156 is unaffected by local variations along the length of the lamination tool 108.

Use of the line profiles 154 as specific portions of the lamination surface 110 to be measured and generation of the master surface-data 116 that represents the line profiles 154 advantageously reduce the time required to measure the lamination surface 110, reduce the amount of data required to sufficiently represent the lamination surface 110, and reduce the processing resources required for the transformation operations used in machine compensation as compared to traditional techniques that require measurement and data collection of an entirety or large areas of the lamination surface 110.

Use of the first locating targets 112 and the second locating targets 152 provide the computer-aided measurement system 126 with fixed reference locations on the lamination tool 108 for initial measurement of the line profiles 154 of the lamination surface 110.

Use of the relationship between the master surface-data 116 and the master target-data 118 established by the master file 114 enables the profile positions of the line profiles 154 and, thus, the surface position of the lamination surface 110 to be determined from a subsequent remeasurement of the first locating targets 112 and the second locating targets 152 without requiring a subsequent measurement of the lamination surface 110.

In one or more examples, the master file 114 is created upon an initial loading of the lamination tool 108 in a work cell 104 (e.g., as shown in Fig. 11). As an example, upon placing the lamination tool 108 in the work cell 104, the computer-aided measurement system 126 measures the lamination tool 108 and generates the master target-data 118 and the master surface-data 116. The computing device 134 generates the master file 114 and associates the master file 114 with the lamination tool 108. In one or more examples, the master file 114 represents an initial or baseline measurement of the lamination tool 108. In one or more examples, the master file 114 is used to represent the nominal position of the lamination tool 108 or replaces a design specification (e.g., CAD model) originally representing the nominal position of the lamination tool 108.

In one or more examples, upon the initial measurement of the lamination tool 108, the master file 114 is used for determining the transform and compensating the NC composite placement machine 102.

In one or more examples, the computing device 134 compares the profile positions of the line profiles 154 represented by the master surface-data 116 of the master file 114 to nominal positions of the line profiles 154 and determines a deviation 176 (shown in Fig. 1) between the profile positions of the line profiles 154 and the nominal positions of the line profiles 154. The deviation 176 represents the global rigid body transform and may be represented algebraically using a transformation coordinate matrix and calculated or determined using a best fit analysis, such as a least squares method, between the master surface-data 116 representing the profile positions of the line profiles 154 and data representing the nominal positions of the line profiles 154.

The computing device 134 transfers the deviation 176 to the NC composite placement machine 102. The NC composite placement machine 102 compensates the NC program path 222 based on the deviation 176.

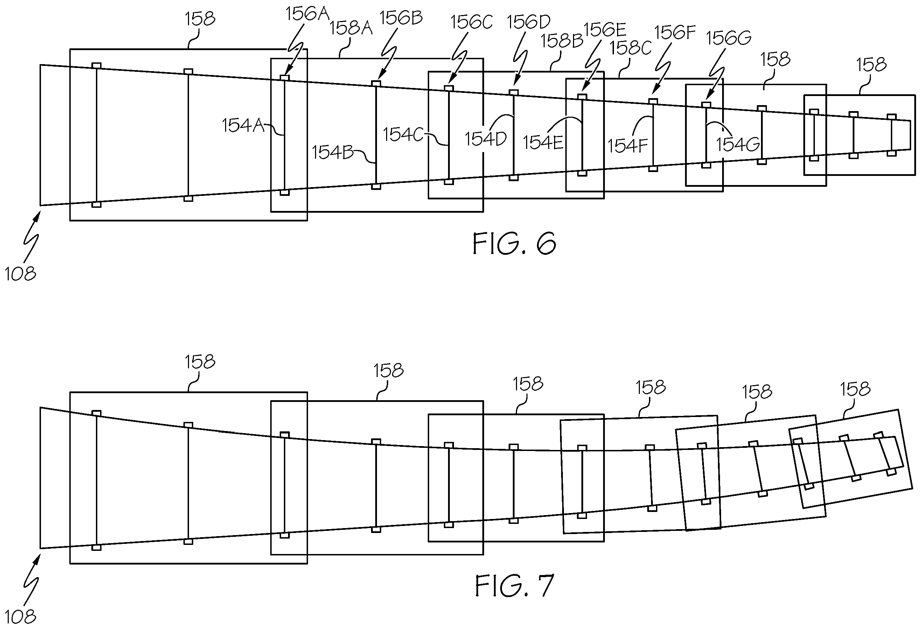

Referring now to Fig. 6, which schematically illustrates an example of a virtual representation of the lamination tool 108, as represented by collected data (e.g., the master surface-data 116 and the master target-data 118 of the master file 114). In one or more examples, the computing device 134 is configured to divide the master file 114 into a plurality of zones 158. The computing device 134 is configured to associate the zones 158 with corresponding portions or sections of the lamination surface 110. As an example, the computing device 134 associates each one of the zones 158 with a corresponding portion or section of the lamination surface 110.

In one or more examples, each one of the zones 158 includes a portion of the master surface-data 116 representing three of the line profiles 154 and a portion of the master target-data 118 representing three of the target pairs 156 associated with or corresponding to the three of the line profiles 154. In other examples, one or more of the zones 158 may include a portion of the master surface-data 116 representing more than three of the line profiles 154 and a portion of the master target-data 118 representing more than three of the target pairs 156 associated with or corresponding to the more than three of the line profiles 154.

In one or more examples, each one of the zones 158 overlaps a directly adjacent one of the zones 158 such that a portion of the master surface-data 116 representing one of the line profiles 154 and a portion of the master target-data 118 representing one of the target pairs 156 associated with the one of the line profiles 154 is shared by a directly adjacent pair of the zones 158. As an example, zone 158A includes a portion of the master surface-data 116 representing line profiles 154A, 154B, 154C and a portion of the master target-data 118 representing target pairs 156A, 156B, 156C. Zone 158B overlaps zone 158A and includes a portion of the master surface-data 116 representing line profiles 154C, 154D, 154E and a portion of the master target-data 118 representing target pairs 156C, 156D, 156E. Zone 158C overlaps zone 158B and includes a portion of the master surface-data 116 representing line profiles 154E, 154F, 154G and a portion of the master target-data 118 representing target pairs 156E, 156F, 156G and so forth.

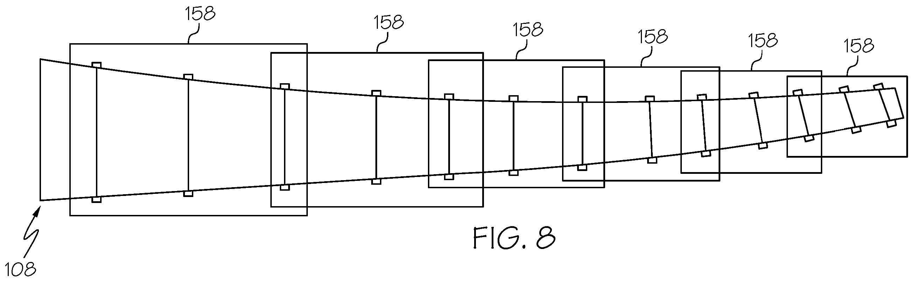

Referring now to Figs. 7 and 8, which schematically illustrate an example of virtual representations of the lamination tool 108, as represented by collected data (e.g., the master surface-data 116 and the master target-data 118 of the master file 114). In Figs. 7 and 8, the lamination tool 108 includes one or more local variations in the surface position of the lamination surface 110 due to bending and/or twisting of the lamination tool 108 upon placement of the lamination tool 108 in the work cell 104 (e.g., as shown in Fig. 3).

As illustrated in Fig. 7, in one or more examples, the computing device 134 compares the profile positions of the line profiles 154 represented by the master surface-data 116 of the master file 114 for each one of the zones 158 to the nominal positions of the line profiles 154 of corresponding portions or sections of the lamination surface 110 and determines a plurality of local deviations 178 (shown in Fig. 1) between the profile positions and the nominal positions. The local deviations 178 represent the local rigid body transforms and may be calculated or determined using a best fit analysis, such as a least squares method, between the master surface-data 116 representing the profile positions of the line profiles 154 of each one of the zones 158 and data representing the nominal positions of the line profiles 154.

As illustrated in Fig. 8, the computing device 134 then determines an overall deviation 180 from the local deviations 178. As an example, the computing device 134 interpolates the local deviations 178 along one or more axes to smooth a stepwise function between each one of the zones 158 and a directly adjacent one of the zones 158 (e.g., nearest neighbor).

The computing device 134 transfers the overall deviation 180 to the NC composite placement machine 102. The NC composite placement machine 102 compensates the NC program path 222 based on the overall deviation 180.

In one or more examples, the master file 114 is re-used for determining the transform and compensating the NC composite placement machine 102 upon a subsequent loading of the lamination tool 108 in the work cell 104. It can be appreciated that the tool position of the lamination tool 108 and, more particularly, the surface position of the lamination surface 110 may vary each time the lamination tool 108 is placed in the work cell 104. As such, while the master file 114 represents the known spatial relationship between the first locating targets 112, the second locating targets 152, and the line profiles 154 of the lamination surface 110, the master file 114 may not provide the known tool position of the lamination tool 108 in tool space.

In one or more examples, the computer-aided measurement system 126 remeasures the first locating targets 112 and the second locating targets 152 and generates measured target-data 128. The measured target-data 128 is representative of the target positions of the first locating targets 112 and the second locating targets 152. The target positions of the first locating targets 112 and the second locating targets 152 represented by the measured target-data 128 are known in the tool space after remeasurement.

The computing device 134 is configured to determine the profile positions of the line profiles 154 of the lamination surface 110 from the measured target-data 128 based on the spatial relationship between the master target-data 118 and the master surface-data 116 established by the master file 114. For example, the measured target-data 128 is compared to the master target-data 118. The profile positions of the line profiles 154 are determined based on coordinate differences between the measured target-data 128 and the master target-data 118. Accordingly, use of the measured target-data 128 enables the profile positions of the line profiles 154 represented by the master surface-data 116 to be determined or otherwise known in the tool space from the remeasurement of the first locating targets 112 and the second locating targets 152. In such examples, Figs. 7 and 8 schematically illustrate an example of virtual representations of the lamination tool 108, as represented by collected data (e.g., the master surface-data 116 of the master file 114 as adjusted in space based on the measured target-data 128) upon a subsequent loading of the lamination tool 108 in the work cell 104.

As described above, the computing device 134 compares the newly determined profile positions of the line profiles 154, represented by the master surface-data 116 of the master file 114 and adjusted based on the measured target-data 128, to the nominal positions of the line profiles 154. In an example, the deviation 176 between the profile positions of the line profiles 154 to the nominal positions of the line profiles 154 is determined globally and the NC composite placement machine 102 is compensated by the deviation 176. In another example, the plurality of local deviations 178 between the profile positions of the line profiles 154 for each one of the zones 158 and the nominal positions is determined locally, the overall deviation 180 is determined from the local deviations 178, and the NC composite placement machine 102 is compensated by the overall deviation 180.

Accordingly, the system 100 enables the tool position of the lamination tool 108 and, more particularly, the surface position of the lamination surface 110 to be determined in tool space and the NC composite placement machine 102 to be compensated based on the actual tool position each time the lamination tool 108 is loaded in the work cell 104 without requiring a subsequent full surface measurement of the lamination tool 108.

In one or more examples, the system 100 also facilitates on-the-fly or real-time adjustments or corrections to the compensation of the NC composite placement machine 102. As an example, the computer-aided measurement system 126 remeasures select ones of the first locating targets 112 and the second locating targets 152 that correspond to one of the zones 158. The computer-aided measurement system 126 generates the measured target-data 128. The measured target-data 128 is representative of the newly acquired target positions of the first locating targets 112 and the second locating targets 152. The newly acquired target positions of the first locating targets 112 and the second locating targets 152 represented by the measured target-data 128 are now known in the tool space after remeasurement.

The computing device 134 determines the profile positions of the line profiles 154 of the lamination surface 110 associated with the select ones of the first locating targets 112 and the second locating targets 152 and corresponding to the one of the zones 158 from the measured target-data 128 based on the spatial relationship between the master target-data 118 and the master surface-data 116 established by the master file 114. The computing device 134 compares the newly determined profile positions of the select ones of the line profiles 154 represented by the master surface-data 116 for the one of the zones 158 to the nominal positions of the line profiles 154 of a corresponding portion of the lamination surface 110. The computing device 134 determines a local deviation 178 between the profile positions of the line profiles 154 of the select one of the zones 158 and the nominal positions of the line profiles 154 of the corresponding section of the lamination surface 110. The computing device 134 then modifies the overall deviation 180 with the newly determined value for the local deviation 178. The overall deviation 180, as modified by the newly determined value for the local deviation 178, is transferred to the NC composite placement machine 102. The NC composite placement machine 102 compensates the NC program path 222 based on the overall deviation 180 as modified by the local deviation 178.

Referring to Figs. 1 and 11, in one or more examples, the system 100 includes a vision system 242. The vision system 242 is configured to visually inspect the composite laminate 240 formed on the lamination surface 110 of the lamination tool 108 during the composite placement operation, performed by the NC composite placement machine 102. In one or more examples, the computing device 134 is configured to detect an anomaly or other nonconformance in the composite laminate 240 from the information provided by the vision system 242. The computing device 134 is further configured to determine or select one of the zones 158 that corresponds to a portion of the lamination surface 110 associated with a location of the anomaly. The computing device 134 selects ones of the first locating targets 112 and the second locating targets 152, which correspond to the determined one of the zones 158 to be remeasured by the computer-aided measurement system 126.

Referring again to Fig. 1, in one or more examples, the system 100 is scalable to be used with a plurality of lamination tools 108. In one or more examples, one or more of the lamination tools 108 is a different type of tool than another one of the lamination tools 108. For example, the lamination tools 108 may have different sizes and/or shapes or may be used to form different types of composite laminates 240. In other examples, two or more of the lamination tools 108 are the same type of tool (e.g., having the same size and/or shape or being used to form the same type of composite laminates 240). However, different lamination tools 108 of the same type may have minor differences based on manufacturing tolerances.

In one or more examples, each one of the lamination tools 108 includes an identifier 168. As described above, upon an initial measurement, the computer-aided measurement system 126 measures the first locating targets 112, the second locating targets 152, and a series of the line profiles 154 of the lamination surface 110 for each one of the lamination tools 108. The computer-aided measurement system 126 generates the master surface-data 116 and the master target-data 118 for each one of the lamination tools 108. The computing device 134 generates the master file 114 that establishes the spatial relationship between the master target-data 118 and the master surface-data 116 for each one of the lamination tools 108. The computing device 134 is further configured to associate the master file 114 with the identifier 168 of a corresponding one of the lamination tools 108.

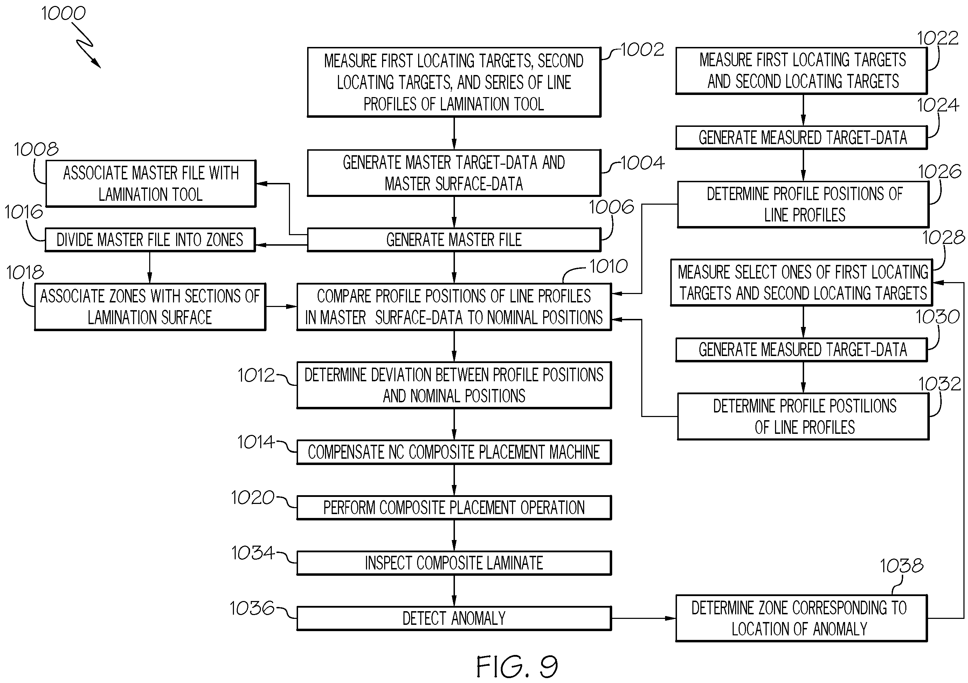

Referring now to Fig. 9, which illustrates an example of a composite manufacturing method 1000, which may also be referred to herein as the method 1000. The method 1000 enables efficient collection of data representing the lamination tool 108. The method 1000 also enables automated compensation of the NC composite placement machine 102 based on an actual position and/or actual shape of the lamination tool 108 represented by the collected data. The method 1000 further enables re-use of previously collected data during subsequent machine compensation operations. In one or more examples, implementation of portions or an entirety of the method 1000 is performed using the system 100 (e.g., shown in Fig. 1)

In one or more examples, the method 1000 includes a step of positioning the lamination tool 108 in the work cell 104. In one or more examples, the method 1000 includes a step of (block 1002) measuring the first locating targets 112, the second locating targets 152, and a series of the line profiles 154 of the lamination surface 110 of the lamination tool 108. The method 1000 includes a step of (block 1004) generating the master surface-data 116 and the master target-data 118. The method 1000 includes a step of (block 1006) generating the master file 114. The step of (block 1006) of generating the master file 114 includes a step of correlating the master target-data 118 to the master surface-data 116 and a step of establishing a spatial relationship between the master target-data 118 and the master surface-data 116. The method 1000 includes a step of (block 1008) associating the master file 114 with the lamination tool 108.

In one or more examples, the method 1000 includes a step of (block 1010) comparing the profile positions of the line profiles 154 represented by the master surface-data 116 of the master file 114 to the nominal positions of the line profiles 154. The method 1000 includes a step of (block 1012) determining a deviation 176 between the profile positions of the line profiles 154 and the nominal positions of the line profiles 154. The method 1000 includes a step of transferring the deviation 176 to the NC composite placement machine. The method 1000 includes a step of (block 1014) compensating the NC composite placement machine 102 based on the deviation 176.

In one or more examples, the deviation 176 represents the global rigid body transform between the master surface-data 116 representing the profile positions of the line profiles 154 and data representing the nominal positions of the line profiles 154.

In one or more examples, the deviation 176 is the overall deviation 180 determined from the plurality of local deviations 178. The local deviations 178 represent the local rigid body transforms between the master surface-data 116 representing the profile positions of the line profiles 154 of each one of the zones 158 and data representing the nominal positions of the line profiles 154 of each one of the sections of the lamination surface 110. Accordingly, in one or more examples, the method 1000 includes a step of (block 1016) dividing the master file 114 into a plurality of the zones 158. The method 1000 includes a step of (block 1018) associating the zones 158 with corresponding portions of the lamination surface 110.

The method 1000 includes a step of (block 1020) performing a composite placement operation using the NC composite placement machine 102 according to the NC program path 222 that is compensated based on the deviation 176, such as the overall deviation 180.

In one or more examples, the method 1000 facilitates compensation of the NC composite placement machine 102 upon a subsequent loading of the lamination tool 108 in the work cell 104, such as before performance of a subsequent composite placement operation. In these examples, the method 1000 includes a step of (block 1022) remeasuring the first locating targets 112 and the second locating targets 152. The method 1000 includes a step of (block 1024) generating the measured target-data 128. The method 1000 includes a step of (block 1026) determining the profile positions of the line profiles 154 of the lamination surface 110 from the measured target-data 128 based on the spatial relationship between the master target-data 118 and the master surface-data 116 established by the master file 114.

Upon a newly acquired determination of the profile positions of the line profiles 154, the method 1000 includes the step of (block 1010) comparing the newly determined profile positions of the line profiles 154 represented by the master surface-data 116 of the master file 114 to the nominal positions of the line profiles 154. The method 1000 includes the step of (block 1012) determining the deviation 176 between the profile positions of the line profiles 154 and the nominal positions of the line profiles 154.

As an example, the comparing step (block 1010) includes a step of comparing the profile positions of the line profiles 154 represented by the master surface-data 116 of the master file 114 of each one of the zones 158 to the nominal positions of the line profiles 154 of corresponding portions of the lamination surface 110. The determining step (block 1012) includes a step of determining a plurality of the local deviations 178 between the profile positions and nominal positions of the lamination surface 110. In these examples, the method 1000 includes a step of determining the overall deviation 180 from the local deviations.

The method 1000 includes the step of transferring the deviation 176 (e.g., the overall deviation 180) to the NC composite placement machine 102. The method 1000 includes the step of (block 1014) compensating the NC program path 222 of the NC composite placement machine 102 based on the deviation 176. The method 1000 includes the step of (block 1020) performing the composite placement operation using the NC composite placement machine 102 according to the NC program path 222 that is compensated based on the deviation 176, such as the overall deviation 180.

In one or more examples, the method 1000 facilitates spot correction and re-compensation of the NC composite placement machine 102, for example, during the composite placement operation (e.g., block 1020). In these examples, the method 1000 includes a step of (block 1028) remeasuring select ones of the first locating targets 112 and the second locating targets 152 corresponding to at least one of the zones 158. The method 1000 includes a step of (block 1030) generating the measured target-data 128. In these examples, the measured target-data 128 represents the newly acquired and determined target positions of the select ones of the first locating targets 112 and the second locating targets 152 corresponding to at least one of the zones 158. The method 1000 includes a step of (block 1032) determining new profile positions of the line profiles 154 of the lamination surface 110 associated with the select ones of the first locating targets 112 and the second locating targets 152 corresponding to at least the one of the zones 158 from the measured target-data 128 based on the spatial relationship between the master target-data 118 and the master surface-data 116 established by the master file 114.

Upon a newly acquired determination of the profile positions of the line profiles 154, the method 1000 includes the step of (block 1010) comparing the newly determined profile positions of the line profiles 154 represented by the master surface-data 116 for at least the one of the zones 158 to the nominal positions of the line profiles 154 of a corresponding portion of the lamination surface 110. In these examples, the step of (block 1012) determining the deviation 176 includes a step of determining the local deviation 178 between the profile positions and the nominal positions and a step of modifying the overall deviation 180 with the local deviation 178.

The method 1000 includes a step of transferring the overall deviation 180, as modified by the local deviation 178, to the NC composite placement machine 102. The method 1000 includes the step of (block 1014) compensating the NC program path 222 based on the overall deviation 180, as modified. The method 1000 includes the step of (block 1020) performing the composite placement operation using the NC composite placement machine 102 according to the NC program path 222 that is compensated based on the overall deviation 180, as modified.

In one or more examples, the spot correction and re-compensation of the NC composite placement machine 102 is performed in response to identification of an anomaly or other nonconformance in the composite laminate 240 being formed on the lamination surface 110 by the NC composite placement machine 102. As an example, an anomaly, such as wrinkles in the composite plies 208, gaps between directly adjacent ones of the composite plies 208, and the like, may be introduced due to inaccuracies or errors in the machine compensation operation. As such, in one or more examples, the method 1000 includes a step of (block 1034) inspecting the composite laminate 240 formed on the lamination surface 110 of the lamination tool 108 during the composite placement operation (e.g., block 1020) performed by the NC composite placement machine 102.

In these examples, the method 1000 includes a step of (block 1036) detecting an anomaly in the composite laminate 240. The method 1000 includes a step of (block 1038) determining one of the zones 158 corresponding to a portion of the lamination surface 110 associated with a location of the anomaly. In these examples, the select ones of the first locating targets 112 and the second locating targets 152 that are remeasured (e.g., block 1028) correspond to the one of the zones 158.

The method 1000 is also scalable for use with the plurality of lamination tools 108. As an example, in one or more examples, the method 1000 includes the step of (block 1002) measuring the first locating targets 112, the second locating targets 152, and a series of the line profiles 154 of the lamination surface 110 of each one of the plurality of lamination tools 108. The method 1000 includes the step of (block 1004) generating the master surface-data 116 and the master target-data 118 for each one of the lamination tools 108. The method 1000 includes the step of (block1006) generating the master file 114 that establishes the spatial relationship between the master target-data 118 and the master surface-data 116 for each one of the lamination tools 108. In these examples, the method 1000 includes the step of (block 1008) associating the master file 114 with the identifier 168 of a corresponding one of the lamination tools 108.

In one or more examples, according to the method 1000, each one of the lamination tools 108 includes the identifier 168. Each one of a plurality of masters file 114 is associated with the identifier 168 of a corresponding one of the lamination tools 108. In one or more examples, the method 1000 includes steps of reading the identifier 168, accessing the master files 114, and selecting the master file 114 associated with the identifier 168 corresponding to one of the lamination tools 108.

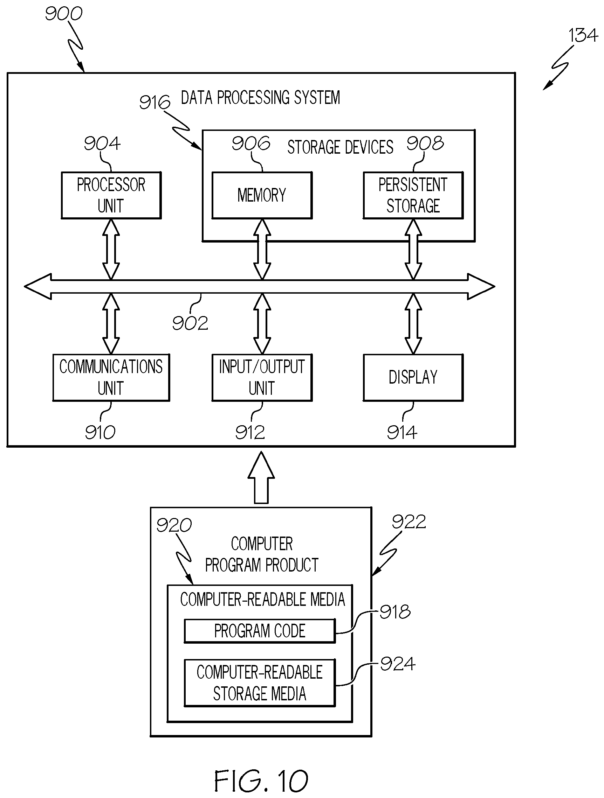

Referring now to Fig. 10, which illustrates an example of the computing device 134 used with or by the system 100. In one or more examples, implementation of one or more operational steps of the method 1000 (shown in Fig. 9) are performed using the computing device 134.

In one or more examples, the computing device 134 includes a processor unit 904 coupled to a storage device 916. The storage device 916 includes program code 918 that is executable by the processor unit 904 to instruct the computer-aided measuring system 126 to measure the first locating targets 112, the second locating targets 152, and a series of the line profiles 154 of the lamination surface 110 of the lamination tool 108 (e.g., as shown in Fig. 5). The storage device 916 includes program code 918 that is executable by the processor unit 904 to generate the master surface-data 116 and master target-data 118 (shown in Fig. 1). The storage device 916 includes program code 918 that is executable by the processor unit 904 to generate the master file 114 that establishes a spatial relationship between the master target-data 118 and the master surface-data 116. The storage device 916 includes program code 918 that is executable by the processor unit 904 to associate the master file 114 with the lamination tool 108.

In one or more examples, the storage device 916 includes program code 918 that is executable by the processor unit 904 to correlate the master target-data 118 and the master surface-data 116 and to create the master file 114 for the lamination tool 108.

In one or more examples, the storage device 916 includes program code 918 that is executable by the processor unit 904 to divide the master file 114 into a plurality of the zones 158 (e.g., as shown in Fig. 6). The storage device 916 includes program code 918 that is executable by the processor unit 904 to associate the zones 158 with corresponding portions of the lamination surface 110.

In one or more examples, upon placement of the lamination tool 108 in the work cell 104, the storage device 916 includes program code 918 that is executable by the processor unit 904 to retrieve the master file 114 associated with the lamination tool 108, for example, after reading the identifier 168. The master file 114 is associated with the identifier 168. The storage device 916 includes program code 918 that is executable by the processor unit 904 to select the master file 114 from a plurality of master files 114 (e.g., saved in the database 246 shown in Fig. 1) corresponding to a plurality of the lamination tools 108.

In one or more examples, the storage device 916 includes program code 918 that is executable by the processor unit 904 to instruct the computer-aided measurement system 126 to remeasure the first locating targets 112 and the second locating targets 152 and to generate the measured target-data 128. The storage device 916 includes program code 918 that is executable by the processor unit 904 to determine the profile positions of the line profiles 154 of the lamination surface 110 from the measured target-data 128 based on the spatial relationship between the master target-data 118 and the master surface-data 116 established by the master file 114.

In one or more examples, the storage device 916 includes program code 918 that is executable by the processor unit 904 to compare the profile positions of the line profiles 154 represented by the master surface-data 116 for the zones 158 to the nominal positions of the line profiles 154 of corresponding portions of the lamination surface 110. The storage device 916 includes program code 918 that is executable by the processor unit 904 to determine a plurality of local deviations between the profile positions and the nominal positions. The storage device 916 includes program code 918 that is executable by the processor unit 904 to determine an overall deviation from the local deviations. The storage device 916 includes program code 918 that is executable by the processor unit 904 to transfer the overall deviation to the NC composite placement machine 102, which is configured to perform the composite placement operation based on the nominal position of the lamination tool 108. The NC composite placement machine 102 compensates the NC program path 222 based on the overall deviation.

In one or more examples, the storage device 916 includes program code 918 that is executable by the processor unit 904 to instruct the computer-aided measurement system 126 to remeasure select ones of the first locating targets 112 and the second locating targets 152 corresponding to at least one of the zones 158 and to generate the measured target-data 128. The storage device 916 includes program code 918 that is executable by the processor unit 904 to determine the profile positions of the line profiles 154 of the lamination surface 110 associated with the select ones of the first locating targets 112 and the second locating targets 152 corresponding to at least the one of the zones 158 from the measured target-data 128 based on the spatial relationship between the master target-data 118 and the master surface-data 116 established by the master file 114. The storage device 916 includes program code 918 that is executable by the processor unit 904 to compare the profile positions of the line profiles 154 represented by the master surface-data 116 for the at least one of the zones 158 to the nominal positions of the line profiles 154 of a corresponding portion of the lamination surface 110. The storage device 916 includes program code 918 that is executable by the processor unit 904 to determine a local deviation between the profile positions and the nominal positions. The storage device 916 includes program code 918 that is executable by the processor unit 904 to modify the overall deviation with the local deviation. The storage device 916 includes program code 918 that is executable by the processor unit 904 to transfer the overall deviation to the NC composite placement machine 102. The NC composite placement machine 102 compensates the NC program path 222 based on the overall deviation as modified by the local deviation.

In one or more examples, the storage device 916 includes program code 918 that is executable by the processor unit 904 to instruct the computer-aided measurement system 126 to measure the first locating targets 112, the second locating targets 152, and the series of line profiles 154 of the lamination surface 110 and to generate the master surface-data 116 and the master target-data 118 for each one of a plurality of the lamination tools 108. The storage device 916 includes program code 918 that is executable by the processor unit 904 to generate the master file 114 that establishes the spatial relationship between the master target-data 118 and the master surface-data 116 for each one of the lamination tools 108. The storage device 916 includes program code 918 that is executable by the processor unit 904 to associate the master file 114 with the identifier 168 of a corresponding one of the lamination tools 108.

In other examples, the storage device 916 includes program code 918 that is executable by the processor unit 904 to perform one or more additional operations, for example, as described herein according to the method 1000 (shown in Fig. 9) and/or the system 100 (shown in Fig. 1).

Referring still to Fig. 10, the computing device 134 includes any suitable data processing system 900. In one or more examples, the data processing system 900 includes a communications framework 902, which provides communications between at least one processor unit 904, one or more storage devices 916, such as memory 906 and/or persistent storage 908, a communications unit 910, an input/output (I/O) unit 912, and a display 914. In this example, the communications framework 902 may take the form of a bus system.

The processor unit 904 serves to execute instructions for software that may be loaded into the memory 906. The processor unit 904 may be a number of processors, a multi-processor core, or some other type of processor, depending on the particular implementation.

The memory 906 and the persistent storage 908 are examples of the storage devices 916. A storage device is any piece of hardware that is capable of storing information, such as, for example, without limitation, at least one of data, program code in functional form, or other suitable information either on a temporary basis, a permanent basis, or both on a temporary basis and a permanent basis. The storage devices 916 may also be referred to as computer readable storage devices. The memory 906 may be, for example, a random-access memory or any other suitable volatile or non-volatile storage device. The persistent storage 908 may take various forms, depending on the particular implementation. The persistent storage 908 may contain one or more components or devices. For example, the persistent storage 908 may be a hard drive, a solid-state hard drive, a flash memory, a rewritable optical disk, a rewritable magnetic tape, or some combination of the above. The media used by the persistent storage 908 also may be removable. For example, a removable hard drive may be used for the persistent storage 908.

The communications unit 910 provides for communications with other data processing systems or devices, such as with the control unit 210 of the NC composite placement machine 102 (shown in Fig. 1). In one or more examples, the communications unit 910 is a network interface card.

Input/output unit 912 allows for input and output of data with other devices that may be connected to the data processing system 900. For example, the input/output unit 912 may provide a connection for user input through at least one of a keyboard, a mouse, or some other suitable input device. Further, the input/output unit 912 may send output to a printer. The display 914 provides a mechanism to display information to a user.

Instructions for at least one of the operating system, applications, or programs may be located in the storage devices 916, which are in communication with the processor unit 904 through the communications framework 902. The processes of the various examples and operations described herein may be performed by the processor unit 904 using computer-implemented instructions, which may be located in a memory, such as the memory 906.

The instructions are referred to as program code, computer usable program code, or computer readable program code (e.g., the program code 918) that may be read and executed by the processor unit 904. The program code in the different examples may be embodied on different physical or computer readable storage media, such as the memory 906 or the persistent storage 908.

In one or more examples, the program code 918 is located in a functional form on computer readable media 920 that is selectively removable and may be loaded onto or transferred to the data processing system 900 for execution by the processor unit 904. In one or more examples, the program code 918 and computer readable media 920 form a computer program product 922. In one or more examples, the computer readable media 920 is computer readable storage media 924.

Examples of the program code 918 include program code or instructions for operation of the NC composite placement machine 102 (e.g., the NC program 220), operation of the computer-aided measurement system 126, processing and analysis of the master surface-data 116, the master target-data 118, and the measured target-data 128 (shown in Fig. 1), generation of the master file 114, determination of deviations used for the global and local tool transforms, compensation of the NC program path 222, and the like.

In one or more examples, the computer readable storage media 924 is a physical or tangible storage device used to store the application program code 918 rather than a medium that propagates or transmits the application program code 918.

Alternatively, the application program code 918 may be transferred to the data processing system 900 using a computer readable signal media. The computer readable signal media may be, for example, a propagated data signal containing the application program code 918. For example, the computer readable signal media may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system 900 are not meant to provide architectural limitations to the manner in which different examples may be implemented. The different examples may be implemented in the data processing system 900 including components in addition to or in place of those illustrated in Fig, 10. Other components shown in Fig. 10 can be varied from the examples shown. The different examples may be implemented using any hardware device or system capable of running the program code 918. As examples, the operational steps described herein may be implemented in dedicated modules or by dedicated software applications.

Referring to Fig. 11, which illustrates an example of a manufacturing environment 200 in which the lamination tool 108 is measured and the composite laminate 240 is fabricated using the NC composite placement machine 102. The NC composite placement machine 102 is compensated for the position (e.g., location, orientation, and shape) of the lamination tool 108 by the system 100.

In one or more examples, the system 100 includes the work cell 104. The tool position of the lamination tool 108 in the work cell 104 is determined by the system 100 in the tool space (e.g., relative to a tool coordinate system 106). The NC program 220 utilizes instructions that reference the nominal position of the lamination tool 108 in the machine space (e.g., relative to a machine coordinate system 150). The NC program 220 compensates the NC program path 222 based on the deviations between the nominal position and the tool position, as described herein above.

In one or more examples, the lamination tool 108 is positioned in the work cell 104 prior to the machine compensation and composite placement operation. In one or more examples, the lamination tool 108 is placed on and is supported in the work cell 104 by a plurality of tool fixtures 218. As an example, the tool fixtures 218 may extend at least a portion of the length of the lamination tool 108 along the longitudinal axis A1. Generally, the tool fixtures 218 set the X, Y, and Z coordinates of the lamination tool 108 in the work-cell coordinate system 106.

Each time the lamination tool 108 is positioned in the work cell 104, the tool position can be different than the nominal position. As an example, the equipment used to place the lamination tool 108 on the tool fixtures 218 may not precisely position the lamination tool 108 in the nominal position. As another example, the tool geometry of the lamination tool 108, such as of the lamination surface 110, may not precisely match the nominal geometry of the lamination tool 108. As yet another example, the geometry, shape, and/or position of at least a portion of the lamination tool 108 may vary once the lamination tool 108 is supported by the tool fixtures 218. For example, the lamination tool 108 having relatively high aspect ratio, such as those used to form elongated composite aircraft structures (e.g., wing panels, stringers, etc.), may bend, twist, sag, or otherwise locally deform at one or more regions along the longitudinal axis A1 of the lamination tool 108. Such deformation may result in the tool position, such as the surface position, of at least a portion of the lamination tool 108 being different than the nominal position.

As such, the system 100, the method 1000, and/or the computing device 134 utilize the first locating targets 112, the second locating targets 152, and the line profiles 154 of the lamination surface 110 as key reference features to quickly and efficiently determine the tool position of the lamination tool 108 and, thus, the surface position of the lamination surface 110 within an acceptable level of accuracy for manufacture of the composite laminate 240. Advantageously, this process significantly reduces the processing time required to accurately determine the position of the lamination tool 108 and compensate the NC composite placement machine 102 prior to placement of the composite plies 208.

In one or more examples, the master file 114 is generated and is provided by the manufacturer of the lamination tool 108. In one or more examples, the master file 114 is generated by the system 100, such as upon initial measuring of the lamination tool 108 in the work cell 104. In either of these examples, the master file 114 is generated by taking measurements of the line profiles 154 of the lamination surface 110 and measurements of the first locating targets 112 and the second locating targets 152.

The master surface-data 116 takes the form of a set of data points that represent the relative location, orientation, and shape of the line profiles 154 of the lamination surface 110. The master target-data 118 take the form of a set of data points that represent the relative location and orientation of the first locating targets 112 and the second locating targets 152. Each data point has its own set of Cartesian coordinate (X, Y, Z) values. The master target-data 118 is correlated to the master surface-data 116. Correlation of the master target-data 118 and the master surface-data 116 fixes or relates the location of each data point relative to any other data point. For example, correlation of the master target-data 118 and the master surface-data 116 fixes and preserves the distance (e.g., Euclidean distance) between every pair of data points.

In one or more examples, the computing device 134 is coupled to or is in communication with the computer-aided measurement system 126. The computer-aided measurement system 126 is or includes any suitable type of computer aided metrology equipment or instrumentation that is capable of taking dimensional measurements of an object and generating data points representing the three-dimensional geometry and position of a surface of the object in space. In one or more examples, the computer-aided measurement system 126 includes at least one measuring device 164. In one or more examples, the computer-aided measurement system 126 includes a plurality of measuring devices 164 (e.g., measuring device 164A, measuring device 164B, and measuring device 164C shown in Fig. 11).

In one or more examples, the computer-aided measure system 126 utilizes contact three-dimensional measuring or scanning. As an example, the measuring device 164 includes or takes the form of a probe or a coordinate measuring machine. In these examples, one or more of the first locating targets 112 and the second locating targets 152 include or take the form of a feature capable of being physically measured using a contact measuring device.

In one or more examples, the computer-aided measurement system 126 utilizes non-contact three-dimensional measuring or scanning. As an example, the measuring device 164 includes or takes the form of a laser scanner, a structured light scanner, or photogrammetry. In these examples, one or more of the first locating targets 112 and the second locating targets 152 include or take the form of a feature capable of being optically measured using a non-contact measuring device.

In one or more examples, the computer-aided measurement system 126 utilizes both contact and non-contact three-dimensional measuring or scanning. As an example, the initial measurement of the first locating targets 112, the second locating targets 152, and the line profiles 154 for generation of the master surface-data 116 and the master target-data 118 used for the master file 114 may be performed via non-contact three-dimensional measuring or scanning. Upon a subsequent loading of the lamination tool 108 in the work cell 104, a subsequent measurement of the first locating targets 112 and the second locating targets 152 for generation of the measured target-data 128 may be performed via contact three-dimensional measuring or scanning. Additionally, during a real-time correction of the machine compensation, remeasurement of select ones of the first locating targets 112 and the second locating targets 152 for generation of the measured target-data 128 may be performed via contact three-dimensional measuring or scanning.

In one or more examples, one or more of the first locating targets 112 and the second locating targets 152 are removably coupled to (e.g., capable of being removed from) the lamination tool 108. As an example, the first locating targets 112 and the second locating targets 152 are coupled to the lamination tool 108 by a custom bushing. This configuration enables the type of target (e.g., optical or physical) utilized by any one of the first locating targets 112 and the second locating targets 152 to be removed (e.g., when unneeded), replaced (e.g., when damaged), and/or swapped (e.g., with a different type of target). This configuration also enables a portion of the first locating targets 112 and the second locating targets 152 to be optical targets and another portion of the first locating targets 112 and the second locating targets 152 to be physical targets. Removal of the first locating targets 112 and the second locating targets 152, for example, from the bushing, may be desirable and beneficial before curing the composite laminate 240 on the lamination tool 108 (e.g., via heat and/or pressure).

In one or more examples, the type of the first locating targets 112 and the second locating targets 152 (e.g., optical or physical) can be switched between the initial measurements (e.g., to generate the master surface-data 116 and the master target-data 118 and to create the master file 114) and the subsequent measurements (e.g., to generate the measured target-data 128). For example, the type of the first locating targets 112 and the second locating targets 152 can be switched while maintaining the position of the first locating targets 112 and the second locating targets 152 relative to the line profiles 154.

In order to reduce the cycle time and increase the efficiency in determining the position of the lamination tool 108 for alignment and compensation of the NC composite placement machine 102 each time the lamination tool 108 is loaded in the work cell 104, the system 100 utilizes the computer-aided measurement system 126 to determine (e.g., measure) the feature positions of only the first locating targets 112 and the second locating targets 152. The system 100 then registers the data points (e.g., master target-data 118) representing the first locating targets 112 and the second locating targets 152 in the master file 114 to the newly measured data points (e.g., measured target-data 128) representing the first locating targets 112 and the second locating targets 152. This registration process consequently provides the positions of the data points (e.g., master surface-data 116) representing the line profiles 154 of the lamination surface 110, thereby providing the actual surface position of the lamination surface 110 (e.g., within an acceptable tolerance) without the requirement of a full measurement of the lamination surface 110.

In one or more examples, the measurement data generated by the computer-aided measurement system 126 is provided to and is processed by the computing device 134. The computing device 134 is operable to process the master surface-data 116 and the master target-data 118 and to create the master file 114 for the lamination tool 108. The computing device 134 is further operable to process the measured target-data 128 as subsequent measurement data, which is used to determine the profile positions of the line profiles 154.

In one or more examples, computer-aided measurement system 126 also includes a movement system 228. The movement system 228 supports and locates the measuring devices 164 relative to the lamination tool 108. In one or more examples, the movement system 228 is configured to independently move each one of the measuring devices 164 relative to the lamination tool 108 and relative to each other.

In one or more examples, the movement system 228 includes or takes the form of an overhead gantry that is configured to move one or more of the measuring devices 164 (e.g., measuring device 164A and measuring device 164B) along the lamination tool 108. In these examples, measuring device 164A and measuring device 164B are non-contact measuring devices. A non-contact measuring (e.g., scanning) operation to measure the lamination tool 108 may be automatically performed using instructions provided to the movement system 228.

In one or more examples in which the measuring devices 164 are non-contact measuring devices, the system 100 includes a support structure 230. The support structure 230 includes a plurality of reference targets 234. Each one of the reference targets 234 is located at a reference-target position that is known in tool space. In one or more examples, the movement system 228 of the computer-aided measurement system 126 is coupled to or is otherwise supported by the support structure 230, for example, such that at least one of the measuring devices 164 is positioned above the lamination tool 108.

The measurement data collected by the computer-aided measurement system 126 includes reference- target data representative of the known (e.g., fixed) positions of the reference targets 234. As an example, the reference-target-data is collected and/or is included when the master surface-data 116 and the master target-data 118 are collected. As another example, the reference-target-data is collected and/or is included when the measured target-data 128 is collected. As such, the reference-target-data is used to register the measurement data and determine the actual tool position of the lamination tool 108.

While reference-target data for reference targets 234 is utilized to determine a relative position of the lamination tool 108 in the work cell 104 in the illustrative examples, it can be appreciated that any one of various other known methods or techniques for determining a relative position of the measurement data may be used.

In one or more examples, the movement system 228 includes or takes the form of a programmable robotic arm or other machine that is configured to move one or more of the measuring devices 164 (e.g., measuring device 164C) along the lamination tool 108. In these examples, measuring device 164C is a contact measuring device. In one or more examples, one of the measuring devices 164 (e.g., measuring device 164C) is coupled to the platform 212 of the NC composite placement machine 102. As an example, measuring device 164C forms or is otherwise attached to a tool head 238 of the NC composite placement machine 102 during measurement of the lamination tool 108. Upon machine compensation and prior to the composite placement operation, measuring device 164C is removed and is replace by the placement head 206. A contact measuring (e.g., probing) operation to measure the lamination tool 108 may be automatically performed using instructions provided to the movement system 228 (e.g., the platform 212 of the NC composite placement machine 102).

In one or more examples, the vision system 242 is or includes any suitable machine vision equipment that is capable of (e.g., configured to) inspect the composite plies 208 as they are being placed by the NC composite placement machine 102. In one or more examples, the vision system 242 is operable to detect a non-conformance in the composite plies 208. The non-conformance may be indicative of an error in the alignment or compensation of the NC composite placement machine 102 with the lamination tool 108.

Referring to Fig. 1, in one or more examples, the system 100 includes a plurality of the lamination tools 108. Each one of the lamination tools 108 includes an identifier 168. The identifier 168 takes any one of various forms. As examples, the identifier 168 is or takes the form of an alphanumeric code, a barcode, a radio frequency identification ("RFID") code, and the like.

In these examples, the system 100 also includes a plurality of master files 114. Each one of the master files 114 includes the master surface-data 116 and the master target-data 118 (e.g., as shown in Fig. 1) for a corresponding one of the lamination tools 108. Each one of the master files 114 is associated with the identifier 168 of a corresponding one of the lamination tools 108.

Referring to Fig. 1, in one or more examples, the system 100 includes a database 246. The database 246 stores the plurality of master files 114 and a plurality of identifiers 168 corresponding to the plurality of lamination tools 108.

Referring still to Fig. 1, in one or more examples, the system 100 includes a reader 248. The reader 248 is operable (e.g., adapted to configured) to detect and/or read the identifier 168 of the lamination tool 108, for example, prior to or after the lamination tool 108 is positioned in the work cell 104. The reader 248 takes any one of various forms. As examples, the reader 248 is or takes the form of an optical scanner, a barcode scanner, a radio frequency identification scanner, and the like.

In one or more examples, the reader 248 provides the identifier 168 to the computing device 134. The computing device 134 is operable to access the database 246 and retrieve the master file 114 associated with the identifier 168.

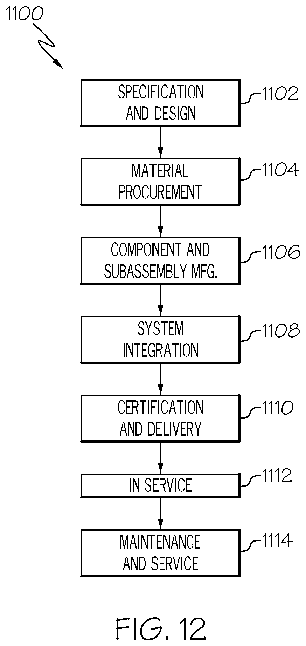

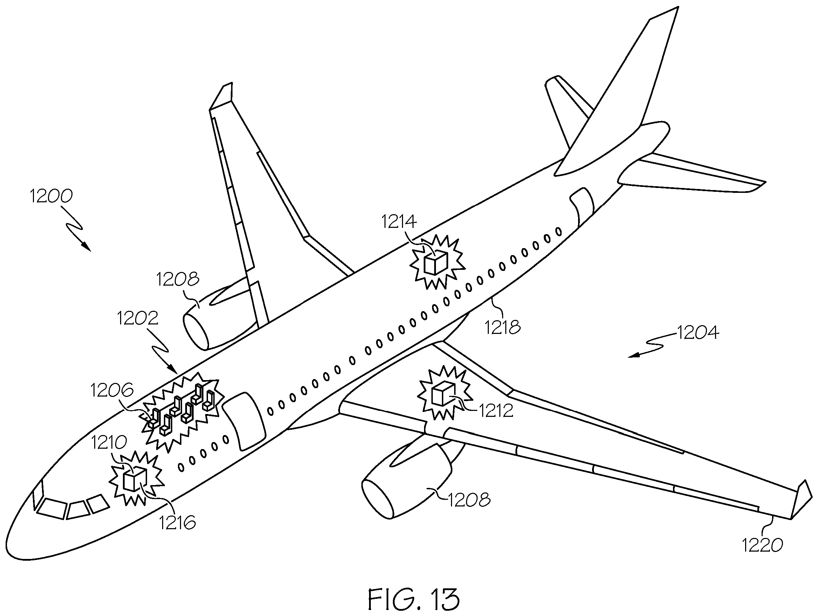

Referring now to Figs. 12 and 13, examples of the system 100, the method 1000, and the computing device 134 may be related to, or used in the context of, an aircraft manufacturing and service method 1100, as shown in the flow diagram of Fig. 12 and an aircraft 1200, as schematically illustrated in Fig. 13. For example, the aircraft 1200 and/or the aircraft production and service method 1100 may utilize a composite structure that is fabricated on the lamination tool 108 using the NC composite placement machine 102. The actual position of the lamination tool 108 is determined using the system 100 and/or the computing device 134 or according to the method 1000. The NC composite placement machine 102 is spatially compensated using the system 100 and/or the computing device 134 or according to the method 1000.

Referring to Fig. 13, examples of the aircraft 1200 includes an airframe 1202 having the interior 1206. The aircraft 1200 also includes a plurality of onboard (e.g., high-level) systems 1204. Examples of the onboard systems 1204 include one or more of a propulsion system 1208, an electrical system 1210, a hydraulic system 1212, an environmental system 1214, and a communication system 1216. In other examples, the aircraft 1200 may include any number of other types of systems, such as a flight control system, a guidance system, a weapons system, and the like. In one or more examples, a composite structure (e.g., formed from the composite laminate 240) forms a component of the airframe 1202, such as a wing 1220, a fuselage 1218, a horizontal stabilizer, a vertical stabilizer or a panel, a stringer, a spar, and the like thereof.

Referring to Fig. 12, during pre-production, the method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the method 1100 illustrated in Fig. 12 may be performed or carried out by a system integrator, a third party, and/or an operator (e.g., a customer). For the purposes of this description, a system integrator may include, without limitation, any number of spacecraft manufacturers and major-system subcontractors; a third party may include, without limitation, any number of vendors, subcontractors, and suppliers; and an operator may be an airline, leasing company, military entity, service organization, and so on.

Examples of the system 100, the method 1000, and the computing device 134 shown and described herein, may be employed during any one or more of the stages of the manufacturing and service method 1100 shown in the flow diagram illustrated by Fig. 12. In an example, a composite structure manufactured using the system 100 and/or according to the method 1000 may form a portion of component and subassembly manufacturing (block 1106) and/or system integration (block 1108). Further, a composite structure manufactured using the system 100 and/or according to the method 1000 may be utilized in a manner similar to components or subassemblies prepared while the aircraft 1200 is in service (block 1112). Also, a composite structure manufactured using the system 100 and/or according to the method 1000 may be utilized during system integration (block 1108) and certification and delivery (block 1110). Similarly, a composite structure manufactured using the system 100 and/or according to the method 1000 may be utilized, for example and without limitation, while the aircraft 1200 is in service (block 1112) and during maintenance and service (block 1114). For example, spare and or replacement composite parts may be fabricated and installed due to a prescribed maintenance cycle or after a realization of damage to the composite part.

Although an aerospace example is shown, the examples and principles disclosed herein may be applied to other industries, such as the automotive industry, the space industry, the construction industry, and other design and manufacturing industries. Accordingly, in addition to aircraft, the examples and principles disclosed herein may apply to composite component assemblies and systems and methods of making the same for other types of vehicles (e.g., land vehicles, marine vehicles, space vehicles, etc.) and stand-alone structures.

Throughout the present disclosure, the term "composite materials" refers to the tough, light-weight materials created by combining two or more functional components. For example, a composite material may include reinforcing fibers bound in a polymer resin matrix. The fibers may be unidirectional or may take the form of a woven cloth or fabric. After the layers of composite material have been laid up on a tool, the layers of composite material may be consolidated or cured (e.g., upon exposure to temperature and/or pressure), thus forming a final composite structure.

The composite structure may be used as components in many types of platforms. A platform having composite components may be, for example, a mobile platform, a stationary platform, a land-based structure, an aquatic-based structure, and a space-based structure. More specifically, a platform may be an aircraft, a surface ship, a tank, a personnel carrier, a train, a spacecraft, a space station, a satellite, a submarine, an automobile, a power plant, a bridge, a dam, a house, a manufacturing facility, a building, and any other suitable type of platform.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component or step preceded with the word "a" or "an" should be understood as not excluding a plurality of features, elements, components or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represent a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

For the purpose of the present disclosure, an item being positioned along an axis, such as extending along an axis, refers to one or more items being coaxial with the axis or at least approximately parallel to the axis.

For the purpose of the present disclosure, unless explicitly stated otherwise, a "position" of an item refers to a location of the item in three-dimensional space, an angular orientation of the item in three-dimensional space, and/or a shape of the item.

Throughout the present disclosure and figures, the term "numerical control" may also be referred to simply as "NC."

To the extent that terms "includes," "including," "has," "contains," and variants thereof are used herein, such terms are intended to be inclusive in a manner similar to the term "comprises" as an open transition word without precluding any additional or other elements.

Figs. 1-8, 10, 11 and 13, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-8,10, 11 and 13, referred to above, need be included in every example and not all elements, features, and/or components described herein are necessarily depicted in each illustrative example. Accordingly, some of the elements, features, and/or components described and illustrated in Figs. 1-8, 10, 11 and 13 may be combined in various ways without the need to include other features described and illustrated in Figs. 1-8,10, 11 and 13, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1-8, 10, 11 and 13, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-8, 10, 11 and 13, and such elements, features, and/or components may not be discussed in detail herein with reference to each of Figs. 1-8, 10, 11 and 13. Similarly, all elements, features, and/or components may not be labeled in each of Figs. 1-8, 10, 11 and 13, but reference numerals associated therewith may be utilized herein for consistency.

In Figs. 9 and 12, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 9 and 12 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

## Claims

1. A composite manufacturing system (100) comprising:
a lamination tool (108) comprising:
a lamination surface (110);
a plurality of first locating targets (112) extending the lamination surface (110) along a first side (172) of the lamination tool (108); and
a plurality of second locating targets (152) extending the lamination surface (110), along a second side (174) of the lamination tool (108), opposite the first side (172);
a computer-aided measurement system (126) adapted to measure the first locating targets (112), the second locating targets (152), and a series of line profiles (154) of the lamination surface (110) and to generate master surface-data (116) and master target-data (118), wherein:
the master target-data (118) is representative of target positions of the first locating targets (112) and the second locating targets (152);
the master surface-data (116) is representative of profile positions of the line profiles (154) of the lamination surface (110);
each one of the line profiles (154) is associated with and extends between one of a plurality of target pairs (156); and
each one of the target pairs (156) comprises one of the first locating targets (112) and an opposing one of the second locating targets (152); and
a computing device (134) adapted to:
generate a master file (114) that establishes a spatial relationship between the master target-data (118) and the master surface-data (116); and
associate the master file (114) with the lamination tool (108).

2. The composite manufacturing system (100) according to Claim 1, wherein:
the computing device (134) is adapted to:
divide the master file (114) into a plurality of zones (158); and
associate the zones (158) with corresponding portions of the lamination surface (110),
each one of the zones (158) comprises a portion of the master surface-data (116) representing three of the line profiles (154) and a portion of the master target-data (118) representing three of the target pairs (156) associated with the three of the line profiles (154); and
each one of the zones (158) overlaps a directly adjacent one of the zones (158) such that a portion of the master surface-data (116) representing one of the line profiles (154) and a portion of the master target-data (118) representing one of the target pairs (156) associated with the one of the line profiles (154) is shared by a directly adjacent pair of the zones (158).

3. The composite manufacturing system (100) according to Claim 2, wherein:
the computer-aided measurement system (126) is adapted to remeasure the first locating targets (112) and the second locating targets (152) and to generate measured target-data (128);
the measured target-data (128) is representative of the target positions of the first locating targets (112) and the second locating targets (152); and
the computing device (134) is adapted to determine the profile positions of the line profiles (154) of the lamination surface (110) from the measured target-data (128) based on the spatial relationship between the master target-data (118) and the master surface-data (116) established by the master file (114).

4. The composite manufacturing system (100) according to Claim 3, further comprising a numerical control composite placement machine (102) configured to perform a composite placement operation based on a nominal position of the lamination surface (110),
wherein:
the computing device (134) is adapted to:
compare the profile positions of the line profiles (154) of the lamination surface (110) represented by the master surface-data (116) for the zones (158) to nominal positions of corresponding portions of the lamination surface (110);
determine a plurality of local deviations (178) between the profile positions and the nominal positions;
determine an overall deviation (180) from the local deviations (178); and
transfer the overall deviation (180) to the numerical control composite placement machine (102); and
the numerical control composite placement machine (102) compensates a numerical control program path (222) based on the overall deviation (180).

5. The composite manufacturing system (100) according to Claim 4, wherein:
the computer-aided measurement system (126) is adapted to remeasure select ones of the first locating targets (112) and the second locating targets (152) corresponding to one of the zones (158) and to generate the measured target-data (128); and
the computing device (134) is adapted to:
determine the profile positions of the line profiles (154) of the lamination surface (110) represented by the master surface-data (116) and associated with the select ones of the first locating targets (112) and the second locating targets (152) corresponding to the one of the zones (158) from the measured target-data (128) based on the spatial relationship between the master target-data (118) and the master surface-data (116) established by the master file (114);
compare the profile positions of the line profiles (154) represented by the master surface-data (116) for the one of the zones (158) to the nominal positions of a corresponding portion of the lamination surface (110);
determine a local deviation (178) between the profile positions and the nominal positions;
modify the overall deviation (180) with the local deviation (178); and
transfer the overall deviation (180) to the numerical control composite placement machine (102); and
the numerical control composite placement machine (102) compensates the numerical control program path (222) based on the overall deviation (180) as modified by the local deviation (178).

6. A composite manufacturing method (1000) comprising steps of:
measuring, by a computer-aided measurement system (126), first locating targets (112), second locating targets (152), and a series of line profiles (154) of a lamination surface (110) of a lamination tool (108), the first locating targets (112) extending the lamination surface (110) of the lamination tool (108) along a first side (172) of the lamination tool (108), and the second locating targets (152) extending the lamination surface (110), along a second side (174) of the lamination tool (108), opposite the first side (172);
generating, by the computer-aided measurement system (126), master surface-data (116) and master target-data (118), wherein:
the master target-data (118) is representative of target positions of the first locating targets (112) and the second locating targets (152);
the master surface-data (116) is representative of profile positions of the line profiles (154) of the lamination surface (110);
each one of the line profiles (154) is associated with and extends between one of a plurality of target pairs (156); and
each one of the target pairs (156) comprises one of the first locating targets (112) and an opposing one of the second locating targets (152);
generating, by a computing device (134), a master file (114) that establishes a spatial relationship between the master target-data (118) and the master surface-data (116); and
associating, by the computing device (134), the master file (114) with the lamination tool (108).

7. The composite manufacturing method (1000) according to Claim 6, further comprising steps of:
dividing, by the computing device (134), the master file (114) into a plurality of zones (158); and
associating, by the computing device (134), the zones (158) with corresponding portions of the lamination surface (110),
wherein:
each one of the zones (158) comprises a portion of the master surface-data (116) representing three of the line profiles (154) and a portion of the master target-data (118) representing three of the target pairs (156) associated with the three of the line profiles (154); and
each one of the zones (158) overlaps a directly adjacent one of the zones (158) such that a portion of the master surface-data (116) representing one of the line profiles (154) and a portion of the master target-data (118) representing one of the target pairs (156) associated with the one of the line profiles (154) is shared by a directly adjacent pair of the zones (158).

8. The composite manufacturing method (1000) according to Claim 7, further comprising steps of:
remeasuring, by the computer-aided measurement system (126), the first locating targets (112) and the second locating targets (152);
generating, by the computer-aided measurement system (126), measured target-data (128), wherein the measured target-data (128) is representative of the target positions of the first locating targets (112) and the second locating targets (152); and
determining, by the computing device (134), the profile positions of the line profiles (154) of the lamination surface (110) from the measured target-data (128) based on the spatial relationship between the master target-data (118) and the master surface-data (116) established by the master file (114).

9. The composite manufacturing method (1000) according to Claim 8, further comprising steps of:
comparing, by the computing device (134), the profile positions of the line profiles (154) represented by the master surface-data (116) for the zones (158) to the nominal positions of corresponding portions of the lamination surface (110);
determining, by the computing device (134), a plurality of local deviations (178) between the profile positions and the nominal positions;
determining, by the computing device (134), an overall deviation (180) from the local deviations (178);
transferring, by the computing device (134), the overall deviation (180) to a numerical control composite placement machine (102);
compensating, by the numerical control composite placement machine (102), a numerical control program path (222) of the numerical control composite placement machine (102) based on the overall deviation (180); and
performing, by the numerical control composite placement machine (102), a composite placement operation using the numerical control composite placement machine (102) according to the numerical control program path (222) that is compensated based on the overall deviation (180).

10. The composite manufacturing method (1000) according to Claim 9, further comprising steps of:
Remeasuring, by the computer-aided measurement system (126), select ones of the first locating targets (112) and the second locating targets (152) corresponding to one of the zones (158);
generating, by the computer-aided measurement system (126), the measured target-data (128);
determining, by the computing device (134), the profile positions of the line profiles (154) of the lamination surface (110) associated with the select ones of the first locating targets (112) and the second locating targets (152) corresponding to the one of the zones (158) from the measured target-data (128) based on the spatial relationship between the master target-data (118) and the master surface-data (116) established by the master file (114);
comparing, by the computing device (134), the profile positions of the line profiles (154) represented by the master surface-data (116) for the one of the zones (158) to the nominal positions of a corresponding portion of the lamination surface (110);
determining, by the computing device (134), a local deviation (178) between the profile positions and the nominal positions;
modifying, by the computing device (134), the overall deviation (180) with the local deviation (178);
transferring, by the computing device (134), the overall deviation (180) to the numerical control composite placement machine (102);
compensating, by the numerical control composite placement machine (102), the numerical control program path (222) based on the overall deviation (180); and
performing, by the numerical control composite placement machine (102), the composite placement operation using the numerical control composite placement machine (102) according to the numerical control program path (222) that is compensated based on the overall deviation (180).

11. The composite manufacturing method (1000) according to Claim 10, further comprising steps of:
inspecting, by a vision system (242), a composite laminate (240) formed on the lamination surface (110) of the lamination tool (108) during the composite placement operation performed by the numerical control composite placement machine (102);
detecting, by the computing device (134), an anomaly in the composite laminate (240); and
determining, by the computing device (134), one of the zones (158) corresponding to a portion of the lamination surface (110) associated with a location of the anomaly,
wherein the select ones of the first locating targets (112) and the second locating targets (152) that are remeasured correspond to the one of the zones (158).

12. The composite manufacturing method (1000) according to any one according to Claims 6 to 11, further comprising steps of:
measuring, by the computer-aided measurement system (126), the first locating targets (112), the second locating targets (152), and a series of the line profiles (154) of the lamination surface (110) of each one of a plurality of lamination tools (108);
generating, by the computing device (134), the master surface-data (116) and the master target-data (118) for each one of the lamination tools (108);
generating, by the computing device (134), the master file (114) that establishes the spatial relationship between the master target-data (118) and the master surface-data (116) for each one of the lamination tools (108); and
associating, by the computing device (134), the master file (114) with an identifier (168) of a corresponding one of the lamination tools (108).

13. A computer program comprising instructions which, when the program is executed by a processor unit (904) of the computing device (134) of the composite manufacturing system of any one of claims 1 to 5, cause the processor unit (904) to:
instruct a computer-aided measuring system (126) to measure a plurality of first locating targets (112), a plurality of second locating targets (152), and a series of line profiles (154) of a lamination surface (110) of a lamination tool (108) and to generate master surface-data (116) and master target-data (118), wherein:
the master target-data (118) is representative of target positions of the first locating targets (112) and the second locating targets (152);
the master surface-data (116) is representative of profile positions of the line profiles (154) of the lamination surface (110);
each one of the line profiles (154) is associated with and extends between one of a plurality of target pairs (156); and
each one of the target pairs (156) comprises one of the first locating targets (112) and an opposing one of the second locating targets (152);
generate a master file (114) that establishes a spatial relationship between the master target-data (118) and the master surface-data (116); and
associate the master file (114) with the lamination tool (108).

14. The computer program according to Claim 13, further comprising instructions which cause the processor unit (904) to:
divide the master file (114) into a plurality of zones (158); and
associate the zones (158) with corresponding portions of the lamination surface (110),
wherein:
each one of the zones (158) comprises a portion of the master surface-data (116) representing three of the line profiles (154) and a portion of the master target-data (118) representing three of the target pairs (156) associated with the three of the line profiles (154); and
each one of the zones (158) overlaps a directly adjacent one of the zones (158) such that a portion of the master surface-data (116) representing one of the line profiles (154) and a portion of the master target-data (118) representing one of the target pairs (156) associated with the one of the line profiles (154) is shared by a directly adjacent pair of the zones (158).

15. The computer program according to Claim 13 or 14, further comprising instructions which cause the processor unit (904) to:
instruct the computer-aided measurement system (126) to measure the first locating targets (112), the second locating targets (152), and a series of the line profiles (154) of the lamination surface (110) and to generate the master surface-data (116) and the master target-data (118) for each one of a plurality of lamination tools (108);
generate the master file (114) that establishes the spatial relationship between the master target-data (118) and the master surface-data (116) for each one of the lamination tools (108); and
associate the master file (114) with an identifier (168) of a corresponding one of the lamination tools (108).

## Patentansprüche

1. Verbundwerkstoffherstellungssystem (100) aufweisend:
eine Laminierwerkzeug (108) aufweisend:
eine Laminieroberfläche (110);
eine Mehrzahl von ersten Positionierungszielen (112), die die Laminieroberfläche (110) entlang einer ersten Seite (172) des Laminierwerkzeugs (108) erweitern; und
eine Mehrzahl von zweiten Positionierungszielen (152), die die Laminieroberfläche (110) entlang einer zweiten Seite (174) des Laminierwerkzeugs (108), entgegengesetzt zu der ersten Seite (172), erweitern;
eine computergestützte Messeinrichtung (126), die dazu ausgebildet ist, die ersten Positionierungsziele (112), die zweiten Positionierungsziele (152) und eine Reihe von Linienprofilen (154) der Laminieroberfläche (110) zu messen und Masteroberflächendaten (116) und Masterziel-Daten (118) zu erzeugen, wobei:
die Masterziel-Daten (118) repräsentativ sind für Zielpositionen der ersten Positionierungsziele (112) und der zweiten Positionierungsziele (152);
die Masteroberflächendaten (116) repräsentativ sind für Profilpositionen der Linienprofile (154) der Laminieroberfläche (110);
jedes der Linienprofile (154) einem einer Mehrzahl von Zielpaaren (156) zugeordnet ist und sich zwischen diesem erstreckt; und
jedes der Zielpaare (156) eines der ersten Positionierungsziele (112) und ein entgegengesetztes der zweiten Positionierungsziele (152) aufweist; und
eine Recheneinrichtung (134), die dazu ausgebildet ist:
eine Masterdatei (114) zu erzeugen, die eine räumliche Beziehung zwischen den Masterziel-Daten (118) und den Masteroberflächendaten (116) herstellt; und
die Masterdatei (114) dem Laminierwerkzeug (108) zuzuordnen.

2. Verbundwerkstoffherstellungssystem (100) nach Anspruch 1, wobei:
die Recheneinrichtung (134) dazu ausgebildet ist:
die Masterdatei (114) in eine Mehrzahl von Zonen (158) zu unterteilen; und
die Zonen (158) entsprechenden Abschnitten der Laminieroberfläche (110) zuzuordnen,
wobei jede der Zonen (158) einen Abschnitt der Masteroberflächendaten (116) aufweist, der drei der Linienprofile (154) repräsentiert, und einen Abschnitt der Masterziel-Daten (118) aufweist, der drei der Zielpaare (156) repräsentiert, die den drei Linienprofilen (154) zugeordnet sind; und
wobei jede der Zonen (158) eine unmittelbar benachbarte der Zonen (158) überlappt, so dass ein Abschnitt der Masteroberflächendaten (116), der eines der Linienprofile (154) repräsentiert, und ein Abschnitt der Masterziel-Daten (118), der eines der Zielpaare (156) repräsentiert, die dem einen der Linienprofile (154) zugeordnet sind, von einem unmittelbar benachbarten Paar der Zonen (158) gemeinsam genutzt wird.

3. Verbundwerkstoffherstellungssystem (100) nach Anspruch 2, wobei:
die computergestützte Messeinrichtung (126) dazu ausgebildet ist, die ersten Positionierungsziele (112) und die zweiten Positionierungsziele (152) erneut zu vermessen und gemessene Ziel-Daten (128) zu erzeugen;
die gemessenen Ziel-Daten (128) repräsentativ sind für die Zielpositionen der ersten Positionierungsziele (112) und der zweiten Positionierungsziele (152); und
die Recheneinrichtung (134) dazu ausgebildet ist, die Profilpositionen der Linienprofile (154) der Laminieroberfläche (110) aus den gemessenen Ziel-Daten (128) zu bestimmen, basierend auf der räumlichen Beziehung zwischen den Masterziel-Daten (118) und den Masteroberflächendaten (116), die durch die Masterdatei (114) hergestellt ist.

4. Verbundwerkstoffherstellungssystem (100) nach Anspruch 3, des Weiteren aufweisend eine numerisch gesteuerte Verbundwerkstoffablageeinrichtung (102), die dazu konfiguriert ist, einen Verbundwerkstoffablagevorgang basierend auf einer Sollposition der Laminieroberfläche (110) auszuführen,
wobei:
die Recheneinrichtung (134) dazu ausgebildet ist:
die Profilpositionen der Linienprofile (154) der Laminieroberfläche (110), die durch die Masteroberflächendaten (116) für die Zonen (158) repräsentiert sind, mit Sollpositionen entsprechender Abschnitte der Laminieroberfläche (110) zu vergleichen;
eine Mehrzahl von lokalen Abweichungen (178) zwischen den Profilpositionen und den Sollpositionen zu bestimmen;
eine Gesamtabweichung (180) aus den lokalen Abweichungen (178) zu bestimmen; und
die Gesamtabweichung (180) an die numerisch gesteuerte Verbundwerkstoffablageeinrichtung (102) zu übertragen; und
die numerisch gesteuerte Verbundwerkstoffablageeinrichtung (102) einen numerisch gesteuerten Programmpfad (222) basierend auf der Gesamtabweichung (180) kompensiert.

5. Verbundwerkstoffherstellungssystem (100) nach Anspruch 4, wobei:
die computergestützte Messeinrichtung (126) dazu ausgebildet ist, ausgewählte der ersten Positionierungsziele (112) und der zweiten Positionierungsziele (152), die einem der Zonen (158) entsprechen, erneut zu vermessen und die gemessenen Ziel-Daten (128) zu erzeugen; und
die Recheneinrichtung (134) dazu ausgebildet ist:
die Profilpositionen der Linienprofile (154) der Laminieroberfläche (110), die durch die Masteroberflächendaten (116) repräsentiert und den ausgewählten der ersten Positionierungsziele (112) und den zweiten Positionierungsziele (152) zugeordnet sind, die dem einen der Zonen (158) entsprechen, aus den gemessenen Ziel-Daten (128) zu bestimmen, basierend auf der räumlichen Beziehung zwischen den Masterziel-Daten (118) und den Masteroberflächendaten (116), die durch die Masterdatei (114) hergestellt ist;
die Profilpositionen der Linienprofile (154), die durch die Masteroberflächendaten (116) für das eine der Zonen (158) repräsentiert sind, mit den Sollpositionen eines entsprechenden Abschnitts der Laminieroberfläche (110) zu vergleichen;
eine lokale Abweichung (178) zwischen den Profilpositionen und den Sollpositionen zu bestimmen;
die Gesamtabweichung (180) mit der lokalen Abweichung (178) zu modifizieren; und
die Gesamtabweichung (180) an die numerisch gesteuerte Verbundwerkstoffablageeinrichtung (102) zu übertragen; und
die numerisch gesteuerte Verbundwerkstoffablageeinrichtung (102) den numerisch gesteuerten Programmpfad (222) basierend auf der Gesamtabweichung (180), wie sie durch die lokale Abweichung (178) modifiziert ist, kompensiert.

6. Verbundwerkstoffherstellungsverfahren (1000) aufweisend die Schritte:
Messen, durch eine computergestützte Messeinrichtung (126), von ersten Positionierungszielen (112), zweiten Positionierungszielen (152) und einer Reihe von Linienprofilen (154) einer Laminieroberfläche (110) eines Laminierwerkzeugs (108), wobei die ersten Positionierungsziele (112) die Laminieroberfläche (110) des Laminierwerkzeugs (108) entlang einer ersten Seite (172) des Laminierwerkzeugs (108) erweitern und die zweiten Positionierungsziele (152) die Laminieroberfläche (110) entlang einer zweiten Seite (174) des Laminierwerkzeugs (108), entgegengesetzt zu der ersten Seite (172), erweitern;
Erzeugen, durch die computergestützte Messeinrichtung (126), von Masteroberflächendaten (116) und Masterziel-Daten (118), wobei:
die Masterziel-Daten (118) repräsentativ sind für Zielpositionen der ersten Positionierungsziele (112) und der zweiten Positionierungsziele (152);
die Masteroberflächendaten (116) repräsentativ sind für Profilpositionen der Linienprofile (154) der Laminieroberfläche (110);
jedes der Linienprofile (154) einer Mehrzahl von Zielpaaren (156) zugeordnet ist und sich zwischen einem der Zielpaare (156) erstreckt; und
jedes der Zielpaare (156) eines der ersten Positionierungsziele (112) und ein entgegengesetztes der zweiten Positionierungsziele (152) aufweist;
Erzeugen, durch eine Recheneinrichtung (134), einer Masterdatei (114), die eine räumliche Beziehung zwischen den Masterziel-Daten (118) und den Masteroberflächendaten (116) herstellt; und
Zuordnen, durch die Recheneinrichtung (134), der Masterdatei (114) zu dem Laminierwerkzeug (108).

7. Verbundwerkstoffherstellungsverfahren (1000) nach Anspruch 6, des Weiteren aufweisend die Schritte:
Unterteilen, durch die Recheneinrichtung (134), der Masterdatei (114) in eine Mehrzahl von Zonen (158); und
Zuordnen, durch die Recheneinrichtung (134), der Zonen (158) zu entsprechenden Abschnitten der Laminieroberfläche (110),
wobei:
jede der Zonen (158) einen Abschnitt der Masteroberflächendaten (116) aufweist, der drei der Linienprofile (154) repräsentiert, und einen Abschnitt der Masterziel-Daten (118) aufweist, der drei der Zielpaare (156) repräsentiert, die den drei der Linienprofile (154) zugeordnet sind; und
jede der Zonen (158) eine unmittelbar benachbarte der Zonen (158) überlappt, so dass ein Abschnitt der Masteroberflächendaten (116), der eines der Linienprofile (154) repräsentiert, und ein Abschnitt der Masterziel-Daten (118), der eines der Zielpaare (156) repräsentiert, die dem einen der Linienprofile (154) zugeordnet sind, von einem unmittelbar benachbarten Paar der Zonen (158) gemeinsam genutzt wird.

8. Verbundwerkstoffherstellungsverfahren (1000) nach Anspruch 7, des Weiteren aufweisend die Schritte:
Erneutes Vermessen, durch die computergestützte Messeinrichtung (126), der ersten Positionierungsziele (112) und der zweiten Positionierungsziele (152);
Erzeugen, durch die computergestützte Messeinrichtung (126), von gemessenen Ziel-Daten (128), wobei die gemessenen Ziel-Daten (128) repräsentativ sind für die Zielpositionen der ersten Positionierungsziele (112) und der zweiten Positionierungsziele (152); und
Bestimmen, durch die Recheneinrichtung (134), der Profilpositionen der Linienprofile (154) der Laminieroberfläche (110) aus den gemessenen Ziel-Daten (128), basierend auf der räumlichen Beziehung zwischen den Masterziel-Daten (118) und den Masteroberflächendaten (116), die durch die Masterdatei (114) hergestellt ist.

9. Verbundwerkstoffherstellungsverfahren (1000) nach Anspruch 8, des Weiteren aufweisend die Schritte:
Vergleichen, durch die Recheneinrichtung (134), der Profilpositionen der Linienprofile (154), die durch die Masteroberflächendaten (116) für die Zonen (158) repräsentiert sind, mit den Sollpositionen entsprechender Abschnitte der Laminieroberfläche (110);
Bestimmen, durch die Recheneinrichtung (134), einer Mehrzahl von lokalen Abweichungen (178) zwischen den Profilpositionen und den Sollpositionen;
Bestimmen, durch die Recheneinrichtung (134), einer Gesamtabweichung (180) aus den lokalen Abweichungen (178);
Übertragen, durch die Recheneinrichtung (134), der Gesamtabweichung (180) an eine numerisch gesteuerte Verbundwerkstoffablageeinrichtung (102);
Kompensieren, durch die numerisch gesteuerte Verbundwerkstoffablageeinrichtung (102), eines numerisch gesteuerten Programmpfads (222) der numerisch gesteuerten Verbundwerkstoffablageeinrichtung (102) basierend auf der Gesamtabweichung (180); und
Ausführen, durch die numerisch gesteuerte Verbundwerkstoffablageeinrichtung (102), eines Verbundwerkstoffablagevorgangs unter Verwendung der numerisch gesteuerten Verbundwerkstoffablageeinrichtung (102) gemäß dem numerisch gesteuerten Programmpfad (222), der basierend auf der Gesamtabweichung (180) kompensiert ist.

10. Verbundwerkstoffherstellungsverfahren (1000) nach Anspruch 9, des Weiteren aufweisend die Schritte:
Erneutes Vermessen, durch die computergestützte Messeinrichtung (126), ausgewählter der ersten Positionierungsziele (112) und der zweiten Positionierungsziele (152), die einem der Zonen (158) entsprechen;
Erzeugen, durch die computergestützte Messeinrichtung (126), der gemessenen Ziel-Daten (128);
Bestimmen, durch die Recheneinrichtung (134), der Profilpositionen der Linienprofile (154) der Laminieroberfläche (110), die den ausgewählten der ersten Positionierungsziele (112) und den zweiten Positionierungsziele (152) zugeordnet sind, die dem einen der Zonen (158) entsprechen, aus den gemessenen Ziel-Daten (128), basierend auf der räumlichen Beziehung zwischen den Masterziel-Daten (118) und den Masteroberflächendaten (116), die durch die Masterdatei (114) hergestellt ist;
Vergleichen, durch die Recheneinrichtung (134), der Profilpositionen der Linienprofile (154), die durch die Masteroberflächendaten (116) für das eine der Zonen (158) repräsentiert sind, mit den Sollpositionen eines entsprechenden Abschnitts der Laminieroberfläche (110);
Bestimmen, durch die Recheneinrichtung (134), einer lokalen Abweichung (178) zwischen den Profilpositionen und den Sollpositionen;
Modifizieren, durch die Recheneinrichtung (134), der Gesamtabweichung (180) mit der lokalen Abweichung (178);
Übertragen, durch die Recheneinrichtung (134), der Gesamtabweichung (180) an die numerisch gesteuerte Verbundwerkstoffablageeinrichtung (102);
Kompensieren, durch die numerisch gesteuerte Verbundwerkstoffablageeinrichtung (102), des numerisch gesteuerten Programmpfads (222) basierend auf der Gesamtabweichung (180); und
Ausführen, durch die numerisch gesteuerte Verbundwerkstoffablageeinrichtung (102), des Verbundwerkstoffablagevorgangs unter Verwendung der numerisch gesteuerten Verbundwerkstoffablageeinrichtung (102) gemäß dem numerisch gesteuerten Programmpfad (222), der basierend auf der Gesamtabweichung (180) kompensiert ist.

11. Verbundwerkstoffherstellungsverfahren (1000) nach Anspruch 10, des Weiteren aufweisend die Schritte:
Überprüfen, durch ein Bildverarbeitungssystem (242), eines auf der Laminieroberfläche (110) des Laminierwerkzeugs (108) während des durch die numerisch gesteuerte Verbundwerkstoffablageeinrichtung (102) ausgeführten Verbundwerkstoffablagevorgangs gebildeten Verbundwerkstofflaminats (240);
Erfassen, durch die Recheneinrichtung (134), einer Anomalie in dem Verbundwerkstofflaminat (240); und
Bestimmen, durch die Recheneinrichtung (134), einer der Zonen (158), die einem Abschnitt der Laminieroberfläche (110) zugeordnet ist, der mit einer Position der Anomalie verbunden ist,
wobei die ausgewählten der ersten Positionierungsziele (112) und der zweiten Positionierungsziele (152), die erneut vermessen werden, der einen der Zonen (158) entsprechen.

12. Verbundwerkstoffherstellungsverfahren (1000) nach einem der Ansprüche 6 bis 11, des Weiteren aufweisend die Schritte:
Messen, durch die computergestützte Messeinrichtung (126), der ersten Positionierungsziele (112), der zweiten Positionierungsziele (152) und einer Reihe der Linienprofile (154) der Laminieroberfläche (110) jedes einer Mehrzahl von Laminierwerkzeugen (108);
Erzeugen, durch die Recheneinrichtung (134), der Masteroberflächendaten (116) und der Masterziel-Daten (118) für jedes der Laminierwerkzeuge (108);
Erzeugen, durch die Recheneinrichtung (134), der Masterdatei (114), die die räumliche Beziehung zwischen den Masterziel-Daten (118) und den Masteroberflächendaten (116) für jedes der Laminierwerkzeuge (108) herstellt; und
Zuordnen, durch die Recheneinrichtung (134), der Masterdatei (114) zu einem Kennzeichen (168) eines entsprechenden der Laminierwerkzeuge (108).

13. Computerprogramm aufweisend Anweisungen, die, wenn das Programm von einer Prozessoreinheit (904) der Recheneinrichtung (134) des Verbundwerkstoffherstellungssystems nach einem der Ansprüche 1 bis 5 ausgeführt wird, die Prozessoreinheit (904) veranlassen:
Anweisen, eine computergestützte Messeinrichtung (126) zu veranlassen, eine Mehrzahl von ersten Positionierungszielen (112), eine Mehrzahl von zweiten Positionierungszielen (152) und eine Reihe von Linienprofilen (154) einer Laminieroberfläche (110) eines Laminierwerkzeugs (108) zu messen und Masteroberflächendaten (116) und Masterziel-Daten (118) zu erzeugen, wobei:
die Masterziel-Daten (118) repräsentativ sind für Zielpositionen der ersten Positionierungsziele (112) und der zweiten Positionierungsziele (152);
die Masteroberflächendaten (116) repräsentativ sind für Profilpositionen der Linienprofile (154) der Laminieroberfläche (110);
jedes der Linienprofile (154) einer Mehrzahl von Zielpaaren (156) zugeordnet ist und sich zwischen einem der Zielpaare (156) erstreckt; und
jedes der Zielpaare (156) eines der ersten Positionierungsziele (112) und ein entgegengesetztes der zweiten Positionierungsziele (152) aufweist;
Erzeugen einer Masterdatei (114), die eine räumliche Beziehung zwischen den Masterziel-Daten (118) und den Masteroberflächendaten (116) herstellt; und
Zuordnen der Masterdatei (114) zu dem Laminierwerkzeug (108).

14. Computerprogramm nach Anspruch 13, des Weiteren aufweisend Anweisungen, die die Prozessoreinheit (904) veranlassen:
Unterteilen der Masterdatei (114) in eine Mehrzahl von Zonen (158); und
Zuordnen der Zonen (158) zu entsprechenden Abschnitten der Laminieroberfläche (110),
wobei:
jede der Zonen (158) einen Abschnitt der Masteroberflächendaten (116) aufweist, der drei der Linienprofile (154) repräsentiert, und einen Abschnitt der Masterziel-Daten (118) aufweist, der drei der Zielpaare (156) repräsentiert, die den drei der Linienprofile (154) zugeordnet sind; und
jede der Zonen (158) eine unmittelbar benachbarte der Zonen (158) überlappt, so dass ein Abschnitt der Masteroberflächendaten (116), der eines der Linienprofile (154) repräsentiert, und ein Abschnitt der Masterziel-Daten (118), der eines der Zielpaare (156) repräsentiert, die dem einen der Linienprofile (154) zugeordnet sind, von einem unmittelbar benachbarten Paar der Zonen (158) gemeinsam genutzt wird.

15. Computerprogramm nach Anspruch 13 oder 14, des Weiteren aufweisend Anweisungen, die die Prozessoreinheit (904) veranlassen:
Anweisen der computergestützte Messeinrichtung (126) anzuweisen, die ersten Positionierungsziele (112), die zweiten Positionierungsziele (152) und eine Reihe der Linienprofile (154) der Laminieroberfläche (110) zu messen und die Masteroberflächendaten (116) und die Masterziel-Daten (118) für jedes einer Mehrzahl von Laminierwerkzeugen (108) zu erzeugen;
Erzeugen der Masterdatei (114), die die räumliche Beziehung zwischen den Masterziel-Daten (118) und den Masteroberflächendaten (116) für jedes der Laminierwerkzeuge (108) herstellt; und
Zuordnen der Masterdatei (114) zu einem Kennzeichen (168) eines entsprechenden der Laminierwerkzeuge (108).

## Revendications

1. Système de fabrication de composite (100) comprenant :
un outil de laminage (108) comprenant :
une surface de laminage (110) ;
une pluralité de premières cibles de localisation (112) s'étendant sur la surface de laminage (110) le long d'un premier côté (172) de l'outil de laminage (108) ; et
une pluralité de secondes cibles de localisation (152) s'étendant sur la surface de laminage (110), le long d'un second côté (174) de l'outil de laminage (108), à l'opposé du premier côté (172) ;
un système de mesure assisté par ordinateur (126) adapté pour mesurer les premières cibles de localisation (112), les secondes cibles de localisation (152) et une série de profils de lignes (154) de la surface de laminage (110) et pour générer des données de surface principales (116) et des données de cibles principales (118), dans lequel :
les données cibles principales (118) sont représentatives de positions cibles des premières cibles de localisation (112) et des secondes cibles de localisation (152) ;
les données de surface principales (116) sont représentatives de positions de profil des profils de lignes (154) de la surface de laminage (110) ;
chacun des profils de lignes (154) est associé à et s'étend entre une d'une pluralité de paires de cibles (156) ; et
chacune des paires de cibles (156) comprend une des premières cibles de localisation (112) et une opposée des secondes cibles de localisation (152) ; et
un dispositif informatique (134) adapté pour :
générer un fichier principal (114) qui établit une relation spatiale entre les données cibles principales (118) et les données de surface principales (116) ; et
associer le fichier principal (114) à l'outil de laminage (108).

2. Système de fabrication de composite (100) selon la revendication 1, dans lequel :
le dispositif informatique (134) est adapté pour :
diviser le fichier principal (114) en une pluralité de zones (158) ; et
associer les zones (158) à des parties correspondantes de la surface de laminage (110),
chacune des zones (158) comprend une partie des données de surface principales (116) représentant trois des profils de lignes (154) et une partie des données cibles principales (118) représentant trois des paires de cibles (156) associées aux trois des profils de lignes (154) ; et
chacune des zones (158) chevauche une zone directement adjacente des zones (158) de sorte qu'une partie des données de surface principales (116) représentant un des profils de lignes (154) et une partie des données cibles principales (118) représentant une des paires de cibles (156) associées à l'un des profils de lignes (154) est partagée par une paire directement adjacente des zones (158).

3. Système de fabrication de composite (100) selon la revendication 2, dans lequel :
le système de mesure assisté par ordinateur (126) est adapté pour mesurer à nouveau les premières cibles de localisation (112) et les secondes cibles de localisation (152) et pour générer des données de cibles mesurées (128) ;
les données cibles mesurées (128) sont représentatives des positions cibles des premières cibles de localisation (112) et des secondes cibles de localisation (152) ; et
le dispositif informatique (134) est adapté pour déterminer les positions de profil des profils de lignes (154) de la surface de laminage (110) à partir des données cibles mesurées (128) sur la base de la relation spatiale entre les données cibles principales (118) et les données de surface principales (116) établies par le fichier principal (114).

4. Système de fabrication de composites (100) selon la revendication 3, comprenant en outre une machine de placement de composites à commande numérique (102) conçue pour effectuer une opération de placement de composite sur la base d'une position nominale de la surface de laminage (110),
dans lequel :
le dispositif informatique (134) est adapté pour :
comparer les positions de profils des profils de lignes (154) de la surface de laminage (110) représentées par les données de surface principales (116) pour les zones (158) à des positions nominales de parties correspondantes de la surface de laminage (110) ;
déterminer une pluralité d'écarts locaux (178) entre les positions de profils et les positions nominales ;
déterminer un écart global (180) à partir des écarts locaux (178) ; et
transférer l'écart global (180) à la machine de placement de composite à commande numérique (102) ; et
la machine de placement de composite à commande numérique (102) compense une trajectoire de programme à commande numérique (222) sur la base de l'écart global (180).

5. Système de fabrication de composite (100) selon la revendication 4, dans lequel :
le système de mesure assisté par ordinateur (126) est adapté pour mesurer à nouveau certaines des premières cibles de localisation (112) et des secondes cibles de localisation (152) correspondant à une des zones (158) et pour générer les données cibles mesurées (128) ; et
le dispositif informatique (134) est adapté pour :
déterminer les positions des profils de lignes (154) de la surface de laminage (110) représentées par les données de surface principales (116) et associées à celles sélectionnées parmi les premières cibles de localisation (112) et les secondes cibles de localisation (152) correspondant à l'une des zones (158) à partir des données cibles mesurées (128) sur la base de la relation spatiale entre les données cibles principales (118) et les données de surface principales (116) établies par le fichier principal (114) ;
comparer les positions de profil des profils de lignes (154) représentées par les données de surface principales (116) pour l'une des zones (158) aux positions nominales d'une partie correspondante de la surface de laminage (110) ;
déterminer un écart local (178) entre les positions de profils et les positions nominales ;
modifier l'écart global (180) avec l'écart local (178) ; et
transférer l'écart global (180) à la machine de placement de composite à commande numérique (102) ; et
la machine de placement de composites à commande numérique (102) compense la trajectoire de programme à commande numérique (222) sur la base de l'écart global (180) tel que modifié par l'écart local (178).

6. Procédé de fabrication de composite (1000) comprenant les étapes consistant à :
mesurer, à l'aide d'un système de mesure assisté par ordinateur (126), des premières cibles de localisation (112), des secondes cibles de localisation (152) et une série de profils de lignes (154) d'une surface de laminage (110) d'un outil de laminage (108), les premières cibles de localisation (112) étendant la surface de laminage (110) de l'outil de laminage (108) le long d'un premier côté (172) de l'outil de laminage (108), et les secondes cibles de localisation (152) étendant la surface de laminage (110) le long d'un second côté (174) de l'outil de laminage (108), opposé au premier côté (172) ;
générer, par le système de mesure assisté par ordinateur (126), des données de surface principales (116) et des données cibles principales (118), dans lequel :
les données cibles principales (118) sont représentatives de positions cibles des premières cibles de localisation (112) et des secondes cibles de localisation (152) ;
les données de surface principales (116) sont représentatives de positions de profil des profils de lignes (154) de la surface de laminage (110) ;
chacun des profils de lignes (154) est associé à et s'étend entre une d'une pluralité de paires de cibles (156) ; et
chacune des paires de cibles (156) comprend une des premières cibles de localisation (112) et une opposée des secondes cibles de localisation (152) ;
générer, par un dispositif informatique (134), un fichier principal (114) qui établit une relation spatiale entre les données cibles principales (118) et les données de surface principales (116) ; et
associer, par le dispositif informatique (134), le fichier principal (114) à l'outil de laminage (108).

7. Procédé de fabrication de composite (1000) selon la revendication 6, comprenant en outre les étapes consistant à :
diviser, par le dispositif informatique (134), le fichier principal (114) en une pluralité de zones (158) ; et
associer, par le dispositif informatique (134), les zones (158) à des parties correspondantes de la surface de laminage (110),
dans lequel :
chacune des zones (158) comprend une partie des données de surface principales (116) représentant trois des profils de lignes (154) et une partie des données cibles principales (118) représentant trois des paires de cibles (156) associées aux trois des profils de lignes (154) ; et
chacune des zones (158) chevauche une zone directement adjacente des zones (158) de sorte qu'une partie des données de surface principales (116) représentant un des profils de lignes (154) et une partie des données cibles principales (118) représentant une des paires de cibles (156) associées à l'un des profils de lignes (154) sont partagées par une paire directement adjacente des zones (158).

8. Procédé de fabrication de composite (1000) selon la revendication 7, comprenant en outre les étapes consistant à :
mesurer à nouveau, par le système de mesure assisté par ordinateur (126), les premières cibles de localisation (112) et les secondes cibles de localisation (152) ;
générer, par le système de mesure assisté par ordinateur (126), des données cibles mesurées (128), dans lequel les données cibles mesurées (128) sont représentatives des positions cibles des premières cibles de localisation (112) et des secondes cibles de localisation (152) ; et
déterminer, par le dispositif informatique (134), les positions de profil des profils de lignes (154) de la surface de laminage (110) à partir des données cibles mesurées (128) sur la base de la relation spatiale entre les données cibles principales (118) et les données de surface principales (116) établies par le fichier principal (114).

9. Procédé de fabrication de composite (1000) selon la revendication 8, comprenant en outre les étapes consistant à :
comparer, par le dispositif informatique (134), les positions de profils des profils de lignes (154) représentées par les données de surface principales (116) pour les zones (158) aux positions nominales de parties correspondantes de la surface de laminage (110) ;
déterminer, par le dispositif informatique (134), une pluralité d'écarts locaux (178) entre les positions de profils et les positions nominales ;
déterminer, par le dispositif informatique (134), un écart global (180) à partir des écarts locaux (178) ;
transférer, par le dispositif informatique (134), l'écart global (180) à une machine de placement de composite à commande numérique (102) ;
compenser, par la machine de placement composite à commande numérique (102), une trajectoire de programme de commande numérique (222) de la machine de placement composite à commande numérique (102) sur la base de l'écart global (180) ; et
effectuer, par la machine de placement composite à commande numérique (102), une opération de placement composite à l'aide de la machine de placement composite à commande numérique (102) selon la trajectoire de programme à commande numérique (222) qui est compensée sur la base de l'écart global (180).

10. Procédé de fabrication de composite (1000) selon la revendication 9, comprenant en outre les étapes consistant à :
mesurer à nouveau, par le système de mesure assisté par ordinateur (126), certaines des premières cibles de localisation (112) et des secondes cibles de localisation (152) correspondant à l'une des zones (158) ;
générer, par le système de mesure assisté par ordinateur (126), les données cibles mesurées (128) ;
déterminer, par le dispositif informatique (134), les positions de profil des profils de lignes (154) de la surface de laminage (110) associées aux cibles sélectionnées parmi les premières cibles de localisation (112) et les secondes cibles de localisation (152) correspondant à l'une des zones (158) des données cibles mesurées (128) sur la base de la relation spatiale entre les données cibles principales (118) et les données de surface principales (116) établies par le fichier principal (114) ;
comparer, par le dispositif de calcul (134), les positions de profil des profils de lignes (154) représentées par les données de surface principales (116) pour l'une des zones (158) aux positions nominales d'une partie correspondante de la surface de laminage (110) ;
déterminer, par le dispositif informatique (134), un écart local (178) entre les positions de profil et les positions nominales ;
modifier, par le dispositif informatique (134), l'écart global (180) avec l'écart local (178) ;
transférer, par le dispositif informatique (134), l'écart global (180) à la machine de placement de composites à commande numérique (102) ;
compenser, par la machine de placement composite à commande numérique (102), la trajectoire de programme à commande numérique (222) sur la base de l'écart global (180) ; et
effectuer, par la machine de placement composite à commande numérique (102), l'opération de placement composite à l'aide de la machine de placement composite à commande numérique (102) selon la trajectoire de programme à commande numérique (222) qui est compensée sur la base de l'écart global (180).

11. Procédé de fabrication de composite (1000) selon la revendication 10, comprenant en outre les étapes consistant à :
inspecter, par un système de vision (242), un laminé composite (240) formé sur la surface de laminage (110) de l'outil de laminage (108) au cours de l'opération de placement de composite effectuée par la machine de placement de composite à commande numérique (102) ;
détecter, par le dispositif informatique (134), une anomalie dans le laminé de composite (240) ; et
déterminer, par le dispositif informatique (134), une des zones (158) correspondant à une partie de la surface de laminage (110) associée à une localisation de l'anomalie,
dans lequel les cibles sélectionnées parmi les premières cibles de localisation (112) et les secondes cibles de localisation (152) qui sont mesurées à nouveau correspondent à l'une des zones (158).

12. Système de fabrication de composite (1000) selon l'une quelconque des revendications 6 à 11, comprenant en outre les étapes consistant à :
mesurer, par le système de mesure assisté par ordinateur (126), les premières cibles de localisation (112), les secondes cibles de localisation (152) et une série de profils de lignes (154) de la surface de laminage (110) de chacun de la pluralité d'outils de laminage (108) ;
générer, par le dispositif informatique (134), les données de surface principales (116) et les données cibles principales (118) pour chacun des outils de laminage (108) ;
générer, par le dispositif informatique (134), le fichier principal (114) qui établit la relation spatiale entre les données cibles principales (118) et les données de surface principales (116) pour chacun des outils de laminage (108) ; et
associer, par le dispositif informatique (134), le fichier principal (114) à un identificateur (168) d'un correspondant des outils de laminage (108).

13. Programme informatique comprenant des instructions qui, lorsque le programme est exécuté par une unité de traitement (904) du dispositif informatique (134) du système de fabrication de composite selon l'une quelconque des revendications 1 à 5, amène l'unité de traitement (904) à :
demander à un système de mesure assisté par ordinateur (126) de mesurer une pluralité de premières cibles de localisation (112), une pluralité de secondes cibles de localisation (152) et une série de profils de lignes (154) d'une surface de laminage (110) d'un outil de laminage (108) et de générer des données de surface principales (116) et des données de cibles principales (118), dans lequel :
les données cibles principales (118) sont représentatives de positions cibles des premières cibles de localisation (112) et des secondes cibles de localisation (152) ;
les données de surface principales (116) sont représentatives de positions des profils de lignes (154) de la surface de laminage (110) ;
chacun des profils de lignes (154) est associé à et s'étend entre une d'une pluralité de paires de cibles (156) ; et
chacune des paires de cibles (156) comprend une des premières cibles de localisation (112) et une cible opposée des secondes cibles de localisation (152) ;
générer un fichier principal (114) qui établit une relation spatiale entre les données cibles principales (118) et les données de surface principales (116) ; et
associer le fichier principal (114) à l'outil de laminage (108).

14. Programme informatique selon la revendication 13, comprenant en outre des instructions qui amènent l'unité de traitement (904) à :
diviser le fichier principal (114) en une pluralité de zones (158) ; et
associer les zones (158) à des parties correspondantes de la surface de laminage (110),
dans lequel :
chacune des zones (158) comprend une partie des données de surface principales (116) représentant trois des profils de lignes (154) et une partie des données cibles principales (118) représentant trois des paires de cibles (156) associées aux trois des profils de lignes (154) ; et
chacune des zones (158) chevauche une zone directement adjacente des zones (158) de sorte qu'une partie des données de surface principales (116) représentant un des profils de lignes (154) et une partie des données cibles principales (118) représentant une des paires de cibles (156) associées à l'un des profils de lignes (154) est partagée par une paire directement adjacente des zones (158).

15. Programme informatique selon la revendication 13 ou 14, comprenant en outre des instructions qui amènent l'unité de traitement (904) à :
demander au système de mesure assisté par ordinateur (126) de mesurer les premières cibles de localisation (112), les secondes cibles de localisation (152) et une série de profils de lignes (154) de la surface de laminage (110) et de générer les données de surface principales (116) et les données cibles principales (118) pour chacun d'une pluralité d'outils de laminage (108) ;
générer le fichier principal (114) qui établit la relation spatiale entre les données cibles principales (118) et les données de surface principales (116) pour chacun des outils de laminage (108) ; et
associer le fichier principal (114) à un identifiant (168) d'un outil correspondant des outils de laminage (108).
